# EUROPÄISCHE PATENTANMELDUNG

(11) **EP 4 681 528 A1**
(43) Veröffentlichungstag der Anmeldung: **21.01.2026**
(21) Anmeldenummer: 25187808.8
(22) Anmeldetag: 07.07.2025
(51) Int. Cl.: A01G 25/02, H02S 40/00

(54) **WASSERVERTEILUNGSANORDNUNG UND PHOTOVOLTAIKANLAGE MIT EINER WASSERVERTEILUNGSANORDNUNG**

(30) Priorität: 18.07.2024 DE 102024120417
(71) Anmelder: Deutsches Zentrum für Luft- und Raumfahrt e.V., 53227 Bonn (DE)
(72) Erfinder: WILBERT, Stefan, Dr., 04005 Almeria (ES); HANRIEDER, Natalie, Dr., 04005 Almeria (ES)
(74) Vertreter: RPK Patentanwälte Reinhardt und Kaufmann Partnerschaft mbB

(57) **Zusammenfassung**

Die Erfindung betrifft eine Wasserverteilungsanordnung (100) für eine gegen eine Schwerkraftrichtung (g) geneigte Ablauffläche (116) einer Anordnung (111) und eine Photovoltaikanlage (110) mit einer solchen Wasserverteilungsanordnung (100). Die Ablauffläche (116) deckt einen Untergrund (200) ab. Die Wasserverteilungsanordnung umfasst wenigstens ein Element (120) mit einem ersten Endbereich (122), welcher in einer Betriebsstellung an einer Unterkante (112) der Ablauffläche (116) befestigt ist, wobei Wasser (400) von der Ablauffläche (116) zum Element (120) leitbar ist, wobei das Element (120) zumindest teilweise unter die korrespondierende Ablauffläche (116) geführt ist und Wasser (400) über eine dem Untergrund (200) zugewandte Unterseite (129) des Elements (120) zum Untergrund (200) gelangt.

## Beschreibung

Die Erfindung betrifft eine Wasserverteilungsanordnung für eine gegen eine Schwerkraftrichtung geneigte Ablauffläche einer Anordnung, insbesondere eines Photovoltaikmoduls, sowie eine Photovoltaikanlage mit einer solchen Wasserverteilungsanordnung.

### Stand der Technik

Bei Agrivoltaikanlagen, sogenannte APV-Anlagen, welche eine gleichzeitige Flächennutzung für Photovoltaik durch Photovoltaikmodule zur Stromerzeugung und für Landwirtschaft beispielsweise zur Nahrungserzeugung ermöglichen, sind die Photovoltaikmodule über oder in landwirtschaftlichen Flächen angeordnet. Hierbei besteht die Problematik einer inhomogenen Regenwasserverteilung unterhalb und zwischen den Photovoltaikmodulen einer Photovoltaikanlage. Ohne jegliche Vorkehrung tropft das Regenwasser hauptsächlich an den Unterkanten der Photovoltaikmodule ab. Bei Regenfällen kann von den Photovoltaikmodulen abfließendes Wasser unterhalb der Unterkanten der Photovoltaikmodule zu Bodenerosion und zur Bildung von Pfützen führen, während unterhalb einer Photovoltaikmodulfläche wenig bis kein Regenwasser auf den Boden bzw. Untergrund trifft. Dies kann negative Auswirkungen auf das Pflanzenwachstum, den Ernteertrag und die Bodenqualität haben.

Auch bei anderen abdeckenden Elementen, wie beispielsweise Dachvorsprüngen oder Dächern oder Spiegeln oder solarer Flachkollektoren, kann abfließendes Wasser unterhalb der Unterkanten dieser abdeckenden Elemente zu Bodenerosion und zur Bildung von Pfützen oder Rinnsalen führen, während unterhalb der abdeckenden Elemente wenig bis kein Regenwasser auf den Boden bzw. Untergrund trifft.

Bekannt sind Auffanganordnungen, welche an den Unterkanten der Photovoltaikmodule und/oder der abdeckenden Elemente installiert werden können, um das Regenwasser aufzufangen und abzuleiten, wodurch das Regenwasser in Tanks gespeichert oder anderweitig abgeleitet werden kann.

Im Nachgang kann das gespeicherte Wasser auf die von dem wenigstens einen Photovoltaikmodul oder dem abdeckenden Element auf die abgedeckte Fläche, insbesondere eine landwirtschaftlich genutzte Fläche, aufgebracht werden.

Beispielsweise ist aus der DE 10 2014 006 523 A1 eine Vorrichtung zur Nutzung für die Landwirtschaft und zur Gewinnung von erneuerbarer Solarenergie bekannt. Hierbei wird eine Fläche belandwirtschaftet und ein Solarzellenverbund wird auf einem darüber befindlichen Stützen- und Trägergestell installiert. Weiter sind zwischen den Solarzellenreihen Auffangbleche installiert, welche das Regenwasser auffangen und zu weiteren Leitungen leiten, welche das Regenwasser in einen Wasserspeicher leiten, der an einem beliebigen Ort unterhalb oder neben der Anlage installiert werden kann.

Weiter ist aus der DE 10 2013 002 825 A1 eine Agrar- und Photovoltaik-Installation mit einer Vielzahl von in einem horizontalen Abstand zueinander angeordneten Masten bekannt, welche ein Mastenfeld bilden und welche jeweils dazu ausgebildet sind, Photovoltaik-Module auf einer Unterkonstruktion zu tragen. Hierbei sind die Photovoltaik-Module starr zur Sonne ausgerichtet oder werden über die Schwenkachsen in einer Gelenkanordnung zum jeweiligen Sonnenstand ausgerichtet. Die Agrar- und Photovoltaik-Installation weist eine netzunabhängige Wasserversorgung mit einem Regenwassersammelsystem und einem Bewässerungssystem für die Bewässerung eines landwirtschaftlich genutzten Baugrunds auf, wobei eine Vielzahl von Zisternen oder eine Sammelzisterne als Wasserspeicher dient.

Ein weiterer Ansatz für beweglich gelagerte Photovoltaikmodule ist es, die Photovoltaikmodule während eines Regenereignisses vertikal aufzustellen, wodurch die abgedeckte Fläche verringert wird, um die landwirtschaftliche Fläche möglichst homogen beregnen zu lassen.

### Offenbarung der Erfindung

Die Aufgabe der Erfindung ist es, eine Wasserverteilungsanordnung für eine gegen eine Schwerkraftrichtung geneigte Ablauffläche einer Anordnung, insbesondere eines Photovoltaikmoduls, und eine Photovoltaikanlage mit einer solchen Anordnung zu schaffen, welche eine verringerte Bodenfeuchte unterhalb der Anordnung, insbesondere unterhalb des Photovoltaikmodules, und eine erhöhte Erosionsgefahr im Bereich der Anordnung erschwert oder ganz verhindert.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird eine Wasserverteilungsanordnung für eine gegen eine Schwerkraftrichtung geneigte Ablauffläche einer Anordnung vorgeschlagen, wobei die Ablauffläche einen Untergrund wenigstens in einem Bereich abdeckt. Die Anordnung kann hierbei ein Photovoltaikmodul oder ein anderes geeignetes Element oder eine andere geeignete Baugruppe sein.

Die erfindungsgemäße Anordnung umfasst wenigstens ein Element mit einem ersten Endbereich, welcher in einer Betriebsstellung an einer Unterkante der Ablauffläche befestigt ist. Das Element bildet eine Verlängerung der Ablauffläche aus, wobei Wasser von der Ablauffläche zum Element leitbar ist. Das Element ist zumindest teilweise unter die korrespondierende Ablauffläche geführt und Wasser gelangt über eine dem Untergrund zugewandte Unterseite des Elements zum Untergrund, wodurch eine fluidische Verbindung zwischen der Ablauffläche und zumindest einem Abschnitt des von der Ablauffläche abgedeckten Bereichs entsteht, so dass das von der Ablauffläche abfließende Wasser über das Element zumindest zum Abschnitt des von der Ablauffläche abgedeckten Bereichs des Untergrunds leitbar ist.

In vorteilhafter Weise kann durch die erfindungsgemäße Anordnung verhindert oder zumindest teilweise vermieden werden, dass das von der geneigten Ablauffläche der Anordnung ablaufende bzw. abfließende Wasser an der Unterkante der Ablauffläche der Anordnung abtropft oder abströmt und dadurch lediglich auf den Untergrund unterhalb der Unterkante auftrifft.

Durch die erfindungsgemäße Anordnung wird das von der geneigten Ablauffläche der Anordnung ablaufende bzw. abfließende Wasser zu dem von der Ablauffläche abgedeckten Bereich oder zumindest zu einem Abschnitt des abgedeckten Bereichs des Untergrunds geleitet und auf diesen Bereich bzw. Abschnitt verteilt. Je nach Länge und Breite des Elementes kann der gesamte abgedeckte Bereich oder zumindest ein Abschnitt des abgedeckten Bereichs des Untergrunds durch das Element bewässert werden. Dadurch kann in vorteilhafter Weise auf ein Bewässern oder ein nachträgliches Aufbringen von Wasser auf diesen Bereich oder dem Abschnitt des Bereichs verzichtet werden. Dadurch kann die erfindungsgemäße Anordnung zu einer Verbesserung der Bodenqualität führen. Des Weiteren kann ein Pflanzenwachstum in dem abgedeckten Bereich oder dem Abschnitt des abgedeckten Bereichs bzw. in den abgedeckten Bereichen oder den Abschnitten der abgedeckten Bereiche des Untergrunds verbessert werden. Zudem kann auf weitere Elemente, wie beispielsweise eine Wasserpumpe oder ein Bewässerungssystem verzichtet werden. Dadurch kann eine Fehleranfälligkeit bei der Bewässerung des abgedeckten Bereichs oder der Abschnitte der abgedeckten Bereiche reduziert werden. Zudem können kostenintensive Wartungen reduziert oder ganz vermieden werden.

Da das Wasser nicht mehr vollständig von der Unterkante der Ablauffläche auf den Untergrund im Bereich der Unterkante strömt, kann ein Erosionsschaden des Untergrunds in diesem Bereich bzw. in diesen Bereichen vermieden werden. Weiter können Erosionsschäden in weiteren Bereichen des Untergrunds vermieden werden, da der von der Ablauffläche abfließende Wasserstrom über das Element verteilt werden kann. Zudem kann die Bildung von Pfützen und/oder Rinnsalen vermieden werden.

Das Element kann beispielsweise als impermeables Element, insbesondere als Folie oder Blech oder als Element aus einem anderen geeigneten biegbaren oder verformbaren Material, ausgebildet sein. Dadurch weist die Anordnung zum Abführen und Leiten des Wassers keine oder eine reduzierte Abhängigkeit von der Permeabilität des Elements auf. Zudem sind permeable Elemente vorstellbar.

Das Wasser kann von einer dem Untergrund zugewandten Unterseite des Elements zum Untergrund abtropfen.

Unter Abtropfen kann das Bilden und Ablösen von einzelnen Wassertropfen oder das Bilden und Ablösen eines Wasserstroms verstanden werden.

Die erfindungsgemäße Anordnung kann in vorteilhafter Weise einfach nachgerüstet werden und ist einfach in der Umsetzung.

Die erfindungsgemäße Anordnung hat jeweils eine Ausdehnung in Längsrichtung, in Querrichtung und in Hochrichtung. Hierbei entspricht die Hochrichtung der entgegengesetzten Schwerkraftrichtung und die Längsrichtung und die Querrichtung verlaufen senkrecht zueinander und senkrecht zur Hochrichtung. Die Längsrichtung, Querrichtung und Hochrichtung bilden ein globales Koordinatensystem aus. Die Querausdehnung der erfindungsgemäßen Anordnung kann in Querausdehnungsrichtung der Anordnung verlaufen. Beispielsweise kann die Querausdehnungsrichtung der erfindungsgemäßen Anordnung parallel zur Unterkante der Anordnung verlaufen, beispielsweise, wenn die Anordnung eine geradlinige Unterkante aufweist.

Unter der Anordnung wird im Folgenden eine Baugruppe oder ein Element mit einer für Wasser im Wesentlichen undurchlässigen Fläche verstanden. Die Fläche ist hierbei geneigt und geeignet, Wasser zu leiten. Die Baugruppe oder das Element kann ein einteiliges oder mehrteiliges Dach oder ein überstehendes Element oder eine überstehende Baugruppe oder ein Spiegel oder ein solarer Flachkollektor oder das Photovoltaikmodul oder eine andere Baugruppe oder eine Kombination zweier oder mehrerer der genannten Elemente und Baugruppen sein.

Die Anordnung weist eine Längsausdehnung und eine Querausdehnung auf. Die Grundfläche der Anordnung, welche insbesondere von der Längsausdehnung und der Querausdehnung aufgespannt wird, kann quadratisch oder rechteckig sein. Es sind aber auch andere Grundflächen vorstellbar.

Die Querausdehnung der Anordnung kann in Querrichtung und dadurch parallel zur Querausdehnungsrichtung der erfindungsgemäßen Wasserverteilungsanordnung verlaufen. Es sind auch andere Ausrichtungen der Anordnung im globalen Koordinatensystem vorstellbar.

Die Ausrichtung der Längsausdehnung der Anordnung im globalen Koordinatensystem ist insbesondere abhängig von der Ausrichtung der Anordnung zur Hochrichtung.

Wenn die Querausdehnung der Anordnung in Querrichtung des globalen Koordinatensystems verläuft, sind folgende Ausrichtungen vorstellbar:
Bei einer senkrechten Ausrichtung der Anordnung zur Hochrichtung verläuft die Längsausdehnung der Anordnung in Längsrichtung des globalen Koordinatensystems und dadurch parallel zur Längsausdehnungsrichtung der erfindungsgemäßen Wasserverteilungsanordnung.

Bei einer parallelen Ausrichtung der Anordnung zur Hochrichtung verläuft die Längsausdehnung der Anordnung in Hochrichtung. Hierbei wird lediglich ein kleiner Bereich des Untergrundes von der Anordnung abgedeckt.

Bei einer anderen Neigung der Anordnung zur Hochrichtung verläuft die Längsausdehnung der Anordnung in einer Ebene, welche von der Hochrichtung und der Längsrichtung des globalen Koordinatensystems aufgespannt wird. Es sind auch andere Verläufe der Längsausdehnung im globalen Koordinatensystem vorstellbar.

Die Anordnung, insbesondere das Photovoltaikmodul, kann durch einen Ständer über dem Untergrund gehalten werden. Der Ständer gibt einen Abstand der Anordnung zum Untergrund vor. Der Ständer weist zumindest eine Ausdehnung in Hochrichtung auf.

Eine Oberfläche der Anordnung kann Photovoltaikelemente umfassen, welche in einer stromerzeugenden Stellung der Anlage einer Strahlungsquelle und/oder einer von der Strahlungsquelle ausgehenden Strahlung und/oder einer am Untergrund reflektierten Strahlung zugewandt sind. Bei einer schwenkbaren Photovoltaikanlage kann die Oberfläche mit den Photovoltaikelementen der Anordnung schräg zur Hochrichtung ausgerichtet und nachjustiert werden, so dass die Anordnung möglichst viel Strahlung, insbesondere Solarstrahlung, mit den Photovoltaikelementen auffängt. In einer Ruhestellung kann eine schwenkbare Photovoltaikanlage die Anordnung beispielsweise derart drehen, dass die Photovoltaikelemente dem Untergrund zugewandt sind, um die Photovoltaikelemente vor äußeren Einflüssen zu schützen. Bei einer feststehenden Photovoltaikanlage weist die Anordnung immer dieselbe Ausrichtung zur Hochrichtung auf.

Unter einer Ablauffläche der Anordnung wird im Folgenden die Seite der Anordnung verstanden, welche bei Niederschlag, insbesondere bei Regen, größtenteils dem Himmel zugewandt ist und auf welche der Niederschlag, insbesondere der Regen, auftrifft. Dabei ist die Anordnung typischerweise geneigt, beispielsweise Richtung Äquator. Die Ablauffläche kann die Oberseite der Anordnung mit den Photovoltaikelementen oder eine Unterseite der Anordnung mit oder ohne Photovoltaikelementen sein.

Unter einer Oberkante wird im Folgenden die Kante der Ablauffläche verstanden, welche den höchsten Punkt einnimmt. Unter der Unterkante wird die Kante der Ablauffläche verstanden, welche den tiefsten Punkt einnimmt. In der Betriebsstellung der erfindungsgemäßen Wasserverteilungsanordnung ist die Ablauffläche größtenteils dem Himmel zugewandt. Eine Rückseite der Ablauffläche entspricht im Folgenden der Seite der Anordnung, welche in der Betriebsstellung, bei Niederschlag, insbesondere bei Regen, dem Himmel größtenteils abgewandt und dem Untergrund größtenteils zugewandt ist.

Unter dem Element wird ein Element mit einer Längsausdehnung und einer Querausdehnung verstanden. Die Querausdehnung des Elements kann in Querrichtung verlaufen und kann mindestens so lang sein wie die Unterkante der korrespondierenden Ablauffläche. Mehrere nebeneinander angeordnete Teilelemente können das Element ausbilden. Die Teilelemente können hierbei überlappend oder in einer anderen geeigneten Art und Weise zueinander angeordnet sein.

Ein erster Endbereich des Elements kann parallel zur Unterkante der Ablauffläche verlaufen. Der erste Endbereich des Elements kann formschlüssig und/oder kraftschlüssig an der Unterkante der Ablauffläche befestigt sein. Hierbei kann der erste Endbereich des Elements beispielsweise mit einem Draht oder einer Klemmleiste oder einer anderen Befestigungsanordnung an der Unterkante der Ablauffläche befestigt sein. Dadurch kann das Element das abströmende Wasser aufnehmen und weiterleiten. Die Längsausdehnung des Elements kann in Längsrichtung oder in einer schräg zur Hochrichtung verlaufenden Ebene verlaufen. Zudem ist ein bogenförmiger Verlauf der Längsausdehnung des Elements im globalen Koordinatensystem vorstellbar.

Das Element kann beispielsweise rechteckig ausgebildet sein. Der dem ersten Endbereich gegenüberliegende zweite Endbereich des Elements kann unter der Ablauffläche angeordnet und von der Ablauffläche abgedeckt sein. Alternativ kann der zweite Endbereich des Elements in Längsrichtung hinter einer Oberkante der Ablauffläche angeordnet sein.

Das Element überlappt in vorteilhafter Weise zumindest einen Teil des von der korrespondierenden Ablauffläche der Anordnung abgedeckten Bereichs des Untergrunds. Beispielsweise kann das Element den abgedeckten Bereich nahezu vollständig überlappen. Alternativ kann das Element weniger als die Hälfte des abgedeckten Bereichs überlappen. Durch die Überlappung kann das Wasser von dem Element auf den Abschnitt des abgedeckten Bereichs, welcher von dem Element überlappt wird, tropfen oder zum Abschnitt des abgedeckten Bereichs des Untergrunds strömen.

Überlappt das Element mit dem abgedeckten Bereich lediglich teilweise bzw. abschnittsweise, kann auch eine Unterseite der Ablauffläche nur teilweise von dem Element überlappt bzw. verdeckt sein. Dadurch kann unter anderem am Untergrund reflektierte Strahlung an die Unterseite der Ablauffläche gelangen. Des Weiteren kann diffuse Strahlung an die Unterseite der Ablauffläche gelangen. Zudem kann Strahlung aus von der Unterseite sichtbaren Himmelsbereichen an die Unterseite der Ablauffläche gelangen, beispielsweise kann im Sommer morgens und abends direktes Licht an die Unterseite gelangen. Dadurch können an der Unterseite angeordnete Photovoltaikelemente Strom aus diesen Strahlungen erzeugen.

Unter dem Untergrund wird im Folgenden das Gelände verstanden, auf welchem ein oder mehrere Anordnungen angeordnet sind. Der Untergrund kann flach oder geneigt sein. Hierbei sind auch mehrere Neigungen des Untergrunds vorstellbar. Durch den Ständer kann die Neigung der Anordnung zur Hochrichtung unabhängig von der Neigung des Untergrunds sein. Der Untergrund weist eine Oberfläche auf, welche bepflanzt sein kann oder auf der sich wenigstens ein Behälter mit einem für die Bepflanzung geeignetem Inhalt, beispielsweise ein geeignetes Substrat, befinden kann. Hierbei können Pflanzen auch unter den Anordnungen angeordnet sein.

Der von der Anordnung abgedeckte Bereich des Untergrunds ist abhängig von der Neigung und der Ausdehnung der korrespondierenden Anordnung. Durch eine Vielzahl von Abtropfpunkten oder Abtropfbereichen des Elements, welches größtenteils unter der Anordnung angeordnet ist, kann der Boden oder der wenigstens ein Behälter in dem Abschnitt, welcher von dem Element überlappt wird, bewässert und Pfützen sowie Erosion an gewissen Stellen insbesondere an den Kanten der Anordnung vermieden oder zumindest erschwert werden.

Zudem können die auf dem Boden bzw. auf dem Untergrund wachsenden oder in dem wenigstens einem Behälter wachsenden Pflanzen beregnet werden. Alternativ können die Abtropfpunkte oder Abtropfbereiche des Elements oder die Bepflanzung derart angeordnet sein, dass das Wasser neben den Pflanzen auf den Boden bzw. Untergrund tropft oder strömt. Dadurch können Pflanzen mit empfindlicheren Blättern vor Nässe geschützt werden.

Nach einer günstigen Ausgestaltung der Wasserverteilungsanordnung kann das Wasser über den ersten Endbereich des Elementes auf die dem abgedeckten Bereich zugewandte Unterseite des Elements gelangen und von dort über dem abgedeckten Bereich abtropfen. Hierbei kann das Element derart geformt sein, dass die im ersten Endbereich des Elements dem abgedeckten Bereich und der Ablauffläche abgewandte Seite durch Umlenken des Elements unter die Ablauffläche, dem abgedeckten Bereich zugewandt und der Ablauffläche abgewandt ist. Eine mögliche einfache Umsetzung ist, dass das Element mit dem ersten Endbereich auf der Oberseite des unteren Rands der Ablauffläche aufliegt. Dadurch kann das Wasser im ersten Endbereich des Elements auf die dem Untergrund und der Ablauffläche abgewandten Seite des Elements fließen. Diese Seite des Elements ist im Bereich des Elements, welcher unter der Ablauffläche angeordnet ist, dem abgedeckten Bereich zugewandt und bildet in diesem Bereich die Unterseite des Elements aus.

In vorteilhafter Weise können beispielsweise eine Rauigkeit der Unterseite oder ein Wasseraufnahmevermögen des Elements oder eine Kombination aus Rauigkeit und Wasseraufnahmevermögen die Abtropfpunkte oder Abtropfbereiche an der Unterseite des Elements vorgeben.

Das Wasseraufnahmevermögen des Elements kann durch eine Oberflächenspannung und/oder durch Zwischenräume beeinflusst werden.

Weiter können an einer Unterseite des Elements parallel zur Schwerkraftrichtung angeordnete Ableitelemente Abtropfbereiche an der Unterseite vorgeben. Die Ableitelemente können als vertikal in das Element eingearbeitete längliche Objekte oder als auf einer Unterseite des Elements angebrachte längliche Objekte ausgebildet sein. Die Ableitelemente können verwendet werden, um zahlreiche, lokale Abtropfbereiche bzw. Abtropfpositionen bzw. Abtropfpunkte am Element festzulegen. Die Ableitelemente können gitterförmig dicht aneinander angeordnet sein, beispielsweise können die Ableitelemente einen Abstand von 0,5 cm zueinander aufweisen. Dieser Abstand kann in Längsausdehnungsrichtung des Elements abnehmen, um die Anzahl der Abtropfpunkte in Längsausdehnungsrichtung bzw. in Längsrichtung zu erhöhen. Die Ableitelemente können beispielsweise als einfache Stofffäden oder Drähte ausgebildet sein.

Die Menge und die Verteilung des Wassers auf dem abgedeckten Bereich des Untergrunds kann durch die Abtropfbereiche eingestellt werden, beispielsweise kann ein gleichmäßigeres Befeuchten oder ein Befeuchten von vorgegebenen Bereichen des Untergrunds des abgedeckten Bereichs unterhalb der Ablauffläche ermöglicht werden.

Durch die Verteilung der Abtropfbereiche kann in vorteilhafter Weise ein Beregnen des abgedeckten Bereichs umgesetzt werden. Hierbei kann beispielsweise durch die Verteilung der Rauigkeit und/oder des Wasseraufnahmevermögens und/oder der Ableitelemente eingestellt werden, ob das Wasser direkt auf die Pflanzen tropft oder auf Zwischenräume zwischen den Pflanzen trifft. Die beregneten Bereiche können auch unabhängig von der Bepflanzung gewählt werden.

Nach einer günstigen Ausgestaltung der Wasserverteilungsanordnung kann das Wasser im ersten Endbereich zum Element gelangen, wobei das Element permeabel ausgebildet ist und Durchlassöffnungen umfasst, durch welche das Wasser über dem abgedeckten Bereich abtropft. Das Element kann hierbei von Wasser durchtränkt werden und/oder das Wasser strömt an einer der Seiten des Elements entlang.

Unter Durchlassöffnungen werden im Folgenden für Wasser durchlässige Bereiche des Elements verstanden, dort können die Abtropfbereiche bzw. Abtropfpunkte von dem Element vorgegeben werden, wobei das Wasser direkt durch die Durchlassöffnungen zum abgedeckten Bereich tropft. Die Durchlassöffnungen können auf dem Element relativ dicht gesetzt werden. Beispielsweise ist ein Abstand von ungefähr einem Zentimeter vorstellbar. In vorteilhafter Weise kann das Wasser durch die Durchlassöffnungen des Elements zum abgedeckten Bereich strömen bzw. tropfen.

Zusätzlich oder alternativ kann das Wasser durch die Durchlassöffnungen zu der dem abgedeckten Bereich zugewandten Unterseite des Elements gelangen. Hierbei kann sich das Wasser an der Unterseite des Elements sammeln und von dort abtropfen bzw. abströmen. Zusätzlich oder alternativ kann das Wasser an der dem abgedeckten Bereich zugewandten Unterseite entlangströmen und an einem geeigneten Punkt oder Bereich abtropfen.

In vorteilhafter Weise können auch bei einem permeablen Element eine Rauigkeit der Unterseite oder ein Wasseraufnahmevermögen des Elements oder eine Kombination aus Rauigkeit und Wasseraufnahmevermögen die Abtropfpunkte oder Abtropfbereiche an der Unterseite des Elements zusätzlich zu den Durchlassöffnungen vorgeben. Weiter können auch bei einem permeablen Element an der Unterseite des Elements parallel zur Schwerkraftrichtung angeordnete Ableitelemente Abtropfbereiche zusätzlich zu den Durchlassöffnungen an der Unterseite vorgeben. Die Anzahl der Durchlassöffnungen im Element kann der Anzahl der Ableitelemente entsprechen. Alternativ kann die Anzahl der Durchlassöffnungen größer oder kleiner sein als die Anzahl der Ableitelemente. Des Weiteren können sich die Anzahl der Durchlassöffnungen und die Anzahl der Ableitelemente in einem Abschnitt des Elements unterscheiden oder übereinstimmen.

Durch die Verteilung der Abtropfbereiche kann ein Beregnen des abgedeckten Bereichs umgesetzt werden. Hierbei kann beispielsweise durch die Verteilung der Durchlassöffnungen und/oder der Rauigkeit und/oder des Wasseraufnahmevermögens und/oder der Ableitelemente eingestellt werden, ob das Wasser direkt auf die Pflanzen tropft oder auf Zwischenräume zwischen den Pflanzen trifft. Es können Bereiche, welche beregnet werden, auch unabhängig von der Bepflanzung gewählt werden. Zudem kann beispielsweise durch Durchlassöffnungen mit größeren Querschnitten mehr Wasser fließen als durch Durchlassöffnungen mit kleineren Querschnitten, wodurch die Menge des abtropfenden Wassers in einem vorgegebenen Abschnitt des Elements eingestellt werden kann. Die Verteilung des Wassers auf den von der Ablauffläche abgedeckten Bereich kann durch die Anzahl, die Größe und den Abstand der Durchlassöffnungen des Elements in vorteilhafter Weise eingestellt werden. Dadurch kann die Verteilung des von der Ablauffläche ablaufenden Wassers durch das Element verbessert werden. Hierbei kann die Menge und die Verteilung des Wassers auf den abgedeckten Bereich des Untergrunds eingestellt werden, beispielsweise kann ein gleichmäßigeres Befeuchten oder ein Befeuchten von vorgegebenen Bereichen des Untergrunds des abgedeckten Bereichs unterhalb der Ablauffläche ermöglicht werden. Diese Einstellung kann umso feiner sein, je mehr Durchlassöffnungen das Element aufweist.

Zudem können die Durchlassöffnungen homogen oder nicht homogen am Element angeordnet sein. Die Abstände zwischen den Durchlassöffnungen können bei einer homogenen Verteilung beispielsweise 1 cm sein. Durch die Vielzahl der Durchlassöffnungen kann der Untergrund bzw. die Oberfläche des Untergrunds und dadurch eine Bepflanzung auf dem Untergrund gleichmäßiger bewässert und Pfützen und/oder Rinnsale sowie Erosion an gewissen insbesondere an den Kanten der Anordnung Stellen vermieden oder zumindest erschwert werden.

Das Element kann beispielsweise als Netz und/oder als Tuch und/oder als Sieb und/oder als Lochblech und/oder als Schar nebeneinander verlaufender Fasern ausgebildet sein. Beispielsweise können landwirtschaftliche Netze zum Hagelschutz oder zur Abschattung als Elemente genutzt werden. Tücher und Netze haben den Vorteil, dass sie einfach in der Länge und der Breite angepasst werden können. Lochbleche und Siebe haben den Vorteil, dass sie in Längsausdehnungsrichtung eine gewisse Stabilität aufweisen, so dass der zweite Endbereich auch ohne Stützstruktur mit einem vorgegebenen Abstand zum Untergrund und/oder zur Unterkante und/oder zur Oberkante der Ablauffläche positioniert werden kann.

Nach einer günstigen Ausgestaltung der Wasserverteilungsanordnung kann das Element gegen die Schwerkraftrichtung geneigt sein. Dadurch kann die Schwerkraft bewirken, dass das von der Ablauffläche auf das Element strömende Wasser das Element entlangströmt. Hierbei kann der Abstand des tiefsten Punktes des Elements zum Untergrund so gewählt sein, dass dieser oberhalb der höchsten Pflanze angeordnet ist. Die Neigung des Elements kann steiler oder flacher als die Neigung der Ablauffläche sein. In einem Ausführungsbeispiel kann die Neigung des Elements entgegengesetzt zur Neigung der Ablauffläche sein.

Nach einer günstigen Ausgestaltung der Wasserverteilungsanordnung kann die Neigung des Elements konstant sein. Dies ermöglicht ein einfaches Anordnen des Elements. Beispielsweise kann das Element gespannt werden, indem der erste Endbereich an der Unterkante fixiert wird und der zweite Endbereich in einer geeigneten Weise fixiert wird.

In einer alternativen Ausgestaltung der Wasserverteilungsanordnung kann die Neigung des Elements zwischen dem ersten Endbereich und dem zweiten Endbereich abnehmen. Dadurch kann die Neigung in einem an den ersten Endbereich angrenzenden ersten Abschnitt steiler sein als in einem an einen zweiten Endbereich angrenzenden zweiten Abschnitt des Elements.

In einer alternativen Ausgestaltung der Wasserverteilungsanordnung kann der Verlauf des Elements von dem ersten Endbereich ausgehend bis zu einem Tiefpunkt abfallend sein und ab dem Tiefpunkt zu dem zweiten Endbereich hin ansteigen.

Durch die Neigung des Elements kann eine vertikale Abtropfrate des Wassers in vorteilhafter Weise eingestellt bzw. räumlich ausgedehnt werden. Hierbei kann die Neigung des Elements fließend oder abrupt geändert sein. In einem steileren Abschnitt kann das Wasser schneller strömen, wodurch die vertikale Abtropfrate des Elements in diesem Abschnitt reduziert werden kann. In einem flachen Abschnitt des Elements kann das Wasser langsamer strömen, wodurch die vertikale Abtropfrate des Elements in diesem Abschnitt erhöht werden kann. Da im ersten Abschnitt des Elements mehr Wasser strömt als im zweiten Abschnitt des Elements, kann der Anteil des Wassers, welcher in den Bereichen abtropft in etwa der gleiche sein. Dadurch kann das Wasser gleichmäßig über der Oberfläche des abgedeckten Bereichs des Untergrunds verteilt werden.

Nach einer günstigen Ausgestaltung der Wasserverteilungsanordnung kann der zweite Endbereich des Elements unterhalb der Ablauffläche angeordnet sein, an welcher der erste Endbereich befestigt ist. Hierbei kann der tiefste Punkt des Elements der zweite Endbereich des Elements sein. Dadurch kann eine Faltenbildung oder eine Wellenbildung des Elements verhindert werden. Hierbei kann vermieden werden, dass sich an den Tiefpunkten der Falten und Wellen vermehrt Wasser sammeln kann und an diesen Tiefpunkten vermehrt Wasser abtropfen kann. Durch einen Verlauf des Elements, bei welchen der zweite Endbereich den tiefsten Punkt ausbildet, kann zudem erreicht werden, dass das Wasser bis zum zweiten Endbereich des Elements strömt und so auch Wasser zu abgedeckten Bereichen gelangt, welche einen größeren Abstand zur Unterkante der Ablauffläche aufweisen.

In einer alternativen Ausgestaltung der Wasserverteilungsanordnung kann der zweite Endbereich des Elementes zu einer weiteren Ablauffläche oder unter eine weitere Ablauffläche geführt sein. Hierbei kann der Verlauf des Elementes, insbesondere wenn der zweite Endbereich an der weiteren Ablauffläche befestigt ist oder wenn das Element unter der weiteren Ablauffläche angeordnet ist, den Tiefpunkt als tiefsten Punkt aufweisen. Der Verlauf des Elements kann auch den zweiten Endbereich als tiefsten Punkt ausweisen, insbesondere wenn das Element unter der weiteren Ablauffläche angeordnet ist.

In vorteilhafter Weise kann bei einer solchen Anordnung des Elements ein Spalt oder ein Abstand zwischen zwei Ablaufflächen mit dem Element überbrückt werden. Dadurch kann das Element zusammen mit den entsprechenden Ablaufflächen einen Witterungsschutz, beispielsweise einen Hagelschutz und/oder einen Starkregenschutz und/oder einen Sonnenschutz und/oder einen Insektenschutz, für die Bepflanzung in diesem Bereich ausbilden.

Zudem kann bei der Überbrückung eines kleinen Spaltes zwischen den Ablaufflächen durch das Element das Wasser, welches sonst konzentriert unter diesem Spalt abtropfen würde, zuverlässig verteilt werden.

Nach einer günstigen Ausgestaltung der Wasserverteilungsanordnung kann eine Durchlässigkeit des permeabel ausgebildeten Elements zwischen dem ersten Endbereich und zweiten Endbereich konstant sein. In vorteilhafter Weise kann ein solches Element einfach hergestellt und einfach montiert werden. Des Weiteren können Fehler bei der Montage vermieden werden, wenn die Durchlässigkeit zwischen dem ersten Endbereich und dem zweiten Endbereich konstant ist.

Nach einer alternativen Ausgestaltung der Wasserverteilungsanordnung kann eine Durchlässigkeit des permeabel ausgebildeten Elements vom ersten Endbereich zum zweiten Endbereich und/oder zum Tiefpunkt zunehmen. Da der Wasserstrom von der Unterkante der Ablauffläche und dem ersten Endbereich des Elements zum zweiten Endbereich oder zum Tiefpunkt des Elements durch das Abströmen des Wassers durch die Durchlassöffnungen abnimmt, kann durch eine Erhöhung der Durchlässigkeit des Elements zwischen dem ersten Endbereich und dem zweiten Endbereich oder zwischen dem ersten Endbereich und dem Tiefpunkt eine gleichmäßigere Abtropfrate erreicht werden.

Ist der zweite Endbereich ebenfalls mit einer Unterkante der weiteren Ablauffläche verbunden, kann die Durchlässigkeit des permeabel ausgebildeten Elements vom zweiten Endbereich zum Tiefpunkt zunehmen, um auch im Bereich zwischen der weiteren Unterkante und dem Tiefpunkt eine gleichmäßige Abtropfrate zu erzielen.

Hierbei ist zudem eine Änderung der Steigung des Elements mit der Änderung der Durchlässigkeit kombinierbar, um ein gleichmäßiges Abtropfen oder Abströmen des Wassers vom Element zum abgedeckten Bereich zu ermöglichen.

Nach einer günstigen Ausgestaltung der Wasserverteilungsanordnung können die Durchlassöffnungen des permeabel ausgebildeten Elements gleichmäßig verteilt sein. In vorteilhafter Weise kann ein solches Element einfach hergestellt und einfach montiert werden. Des Weiteren können Fehler bei der Montage vermieden werden, wenn die Verteilung der Durchlassöffnungen und dadurch die Durchlässigkeit des Elements zwischen dem ersten Endbereich und dem zweiten Endbereich und/oder dem Tiefpunkt konstant ist.

Nach einer alternativen Ausgestaltung der Wasserverteilungsanordnung kann eine Anzahl und/oder eine Größe der Durchlassöffnungen vom ersten Endbereich zum zweiten Endbereich und/oder zum Tiefpunkt zunehmen. Hierbei kann die Anzahl der Durchlassöffnungen zunehmen oder die Größe der Durchlassöffnungen kann bei gleichbleibender Anzahl der Durchlassöffnungen zunehmen oder die Anzahl der Durchlassöffnungen und deren Größe können zunehmen. Dadurch kann die Durchlässigkeit zwischen dem ersten Endbereich und dem zweiten Endbereich und/oder dem Tiefpunkt zunehmen. Beispielsweise können örtlich variable Schichteigenschaften des Materials des Elements genutzt werden. Beispielsweise können die Faserabstände oder Lochabstände in Längsrichtung bzw. in Längsausdehnungsrichtung zwischen dem ersten Endbereich und dem zweiten Endbereich und/oder dem Tiefpunkt abnehmen, dadurch kann die Anzahl der Durchlassöffnungen in Längsrichtung bzw. in Längsausdehnungsrichtung zwischen dem ersten Endbereich und dem zweiten Endbereich und/oder dem Tiefpunkt zunehmen.

Nach einer günstigen Ausgestaltung der Wasserverteilungsanordnung kann das Element aus optisch transparentem Material ausgebildet sein. Hierbei kann das Element aus Nylon bzw. aus Nylonfäden oder einem transparenten Kunststoff ausgebildet sein. Das transparente Material kann durchlässig für Strahlung, insbesondere Solarstrahlung sein. Beispielsweise kann das transparente Material durchlässig für am Untergrund reflektierte Strahlung, insbesondere Solarstrahlung sein. Zusätzlich oder alternativ kann das transparente Material durchlässig für diffuse Strahlung oder durchlässig für Strahlung, welche aus von der Unterseite sichtbaren Himmelsbereichen stammt, sein.

Dadurch kann eine Strahlung auf die Rückseite der Ablauffläche bzw. auf die entsprechende Seite der Anordnung gelangen, auch wenn das Element zwischen dem reflektierenden Untergrund und der Rückseite der Ablauffläche bzw. der entsprechenden Seite der Anordnung angeordnet ist. Dies ist insbesondere bei Photovoltaikmodulen mit Photovoltaikelementen auf einer Oberseite und einer Unterseite vorteilhaft. So können auch Photovoltaikelemente, welche an der vom Himmel, insbesondere von der Mittagssonne abgewandten Seite der Anordnung angeordnet sind, Strom aus beispielsweise am Untergrund reflektierter Strahlung, diffuser Strahlung, oder zu bestimmten Tageszeiten direkt auf dieser Seite auftreffenden Solarstrahlung Strom erzeugen.

Beispielsweise kann eine Lichtdurchlässigkeit des Elements zwischen dem ersten Endbereich und dem zweiten Endbereich und/oder zum Tiefpunkt hin variieren. Hierbei kann die Lichtdurchlässigkeit konstant zunehmen. Alternativ können vorgegebene Bereiche des Elements lichtdurchlässiger sein als andere Bereiche des Elements. Die Lichtdurchlässigkeit des Elements kann in vorteilhafter Weise an den Untergrund angepasst sein.

Nach einer günstigen Ausgestaltung der Wasserverteilungsanordnung kann das Element in Längsausdehnungsrichtung verlaufende Einschnitte aufweisen. Diese Einschnitte können für das Wasser undurchlässig sein und können dadurch keinen Einfluss auf die vertikale Abtropfrate haben. Alternativ können die Einschnitte auch als Durchlassöffnungen wirken. Das Element kann in den Bereichen der Einschnitte dünner ausgebildet sein oder das Element kann in den Bereichen Öffnungen aufweisen, wodurch das Element durchlässiger für Licht bzw. Solarstrahlung und/oder andere Strahlung ist.

Des Weiteren können Windlasten auf das Element durch die Einschnitte reduziert werden. Die Einschnitte können bei Netzen und/oder Tüchern durch eine Auftrennung von Fasern in Querausdehnungsrichtung erzielt werden. Einschnitte können auch durch den Verzicht von in Querausdehnungsrichtung verlaufenden Fasern erzielt werden. Des Weiteren können in Längsausdehnungsrichtung verlaufende Fasern in vorgegebenen Bereichen gebündelt werden.

Nach einer günstigen Ausgestaltung der Wasserverteilungsanordnung kann eine Stützstruktur das Element abstützen. Insbesondere kann wenigstens ein in Querrichtung bzw. in Querausdehnungsrichtung des Elements verlaufendes Stützelement der Stützstruktur den ersten Endbereich und/oder den zweiten Endbereich des Elements abstützen. Hierbei können am ersten Endbereich und/oder am zweiten Endbereich längliche Objekte, wie beispielsweise Rohre oder Stäbe aus geeigneten Materialien angeordnet werden. Dadurch kann das Element zwischen den beiden Endbereichen leichter gespannt werden und eine Faltenbildung und Wellenbildung erschwert werden. Bei einem Verlauf des Elements mit einem Tiefpunkt zwischen dem ersten Endbereich und dem zweiten Endbereich kann am Tiefpunkt ebenfalls ein Stützelement angeordnet sein.

Nach einer günstigen Ausgestaltung der Wasserverteilungsanordnung kann wenigstens ein in Längsausdehnungsrichtung des Elements verlaufendes Stützelement der Stützstruktur die Neigung des Elements vorgeben. Das Element kann durch das in Längsausdehnungsrichtung des Elements verlaufende Stützelement leichter gespannt werden. Dadurch kann das in Längsausdehnungsrichtung des Elements verlaufende Stützelement die Faltenbildung oder Wellenbildung erschweren. Hierbei können ein oder mehrere in Längsausdehnungsrichtung des Elements verlaufende Stützelemente nebeneinander angeordnet werden. Insbesondere können jeweils an den Seiten des Elements ein in Längsausdehnungsrichtung des Elements verlaufendes Stützelement angeordnet sein. Hierbei kann das Element geeignet stark gespannt an den Stützelementen befestigt sein. Das wenigstens eine in Längsausdehnungsrichtung des Elements verlaufende Stützelement kann als Schiene oder als Rohr oder als Stab oder als gebogene Platte ausgebildet sein. Hierbei kann das Stützelement eine oder mehrere vorgegebene Krümmungen aufweisen.

Nach einer günstigen Ausgestaltung der Wasserverteilungsanordnung kann der zweite Endbereich des Elements über ein Verbindungselement mit der Oberkante der Ablauffläche und/oder mit wenigstens einer Seite der Anordnung und/oder mit einem Ständer verbunden sein. Hierbei kann ein vertikaler Abstand des zweiten Endbereichs zur Oberkante durch eine Länge des Verbindungselements vorgegeben sein. Das Verbindungelement kann längenverstellbar ausgebildet sein. Dadurch kann der vertikale Abstand des zweiten Endbereichs des Elements zur Oberkante der Ablauffläche und zur Oberfläche des Untergrunds in vorteilhafter Weise eingestellt werden. Beispielsweise kann der vertikale Abstand des zweiten Endbereichs zur Oberfläche des Untergrunds vergrößert werden, wenn der abgedeckte Bereich bearbeitet wird oder wenn die Pflanzen eine gewisse Größe erreicht haben. Des Weiteren kann der vertikale Abstand des zweiten Endbereichs zur Oberkante verändert werden, um die Neigung des Elements an eine Stärke des Regens oder an eine Stärke des Windes oder an die Positionierung der Pflanzen oder des mindestens einen Behälters anzupassen.

Nach einem weiteren Aspekt der Erfindung wird eine Photovoltaikanlage mit einer solchen Wasserverteilungsanordnung für eine gegen eine Schwerkraftrichtung geneigte Ablauffläche einer Anordnung vorgeschlagen.

Die Anordnung ist wenigstens ein Photovoltaikmodul, dessen Ablauffläche einen Untergrund wenigstens in einem Bereich abdeckt. Die Wasserverteilungsanordnung umfasst wenigstens ein Element mit einem ersten Endbereich, welcher in einer Betriebsstellung an einer Unterkante der Ablauffläche befestigt ist und eine Verlängerung der Ablauffläche ausbildet. Das Wasser ist von der Ablauffläche zum Element leitbar. Das Element ist zumindest teilweise unter die korrespondierende Ablauffläche geführt. Wasser gelangt über eine dem Untergrund zugewandte Unterseite des Elements zum Untergrund, wodurch eine fluidische Verbindung zwischen der Ablauffläche und zumindest einen Abschnitt des von der Ablauffläche abgedeckten Bereichs entsteht. Dadurch kann das von der Ablauffläche abfließende Wasser über das Element zumindest zum Abschnitt des von der Ablauffläche abgedeckten Bereichs des Untergrunds geleitet werden.

Die Vorteile und Definitionen der Wasserverteilungsanordnung für eine gegen eine Schwerkraftrichtung geneigte Ablauffläche gelten auch für die erfindungsgemäße Photovoltaikanlage.

In vorteilhafter Weise kann durch die Wasserverteilungsanordnung verhindert oder zumindest teilweise vermieden werden, dass das von der geneigten Ablauffläche des Photovoltaikmoduls ablaufende Wasser an der Unterkante abtropft oder abströmt und lediglich auf den Untergrund unter der Unterkante auftrifft.

Unter einer Photovoltaikanlage wird im Folgenden eine Anlage mit wenigstens einem Ständer verstanden, welcher wenigstens ein Photovoltaikmodul über dem Untergrund hält. Das wenigstens eine Photovoltaikmodul kann über wenigstens ein Kabel beispielsweise mit einem Wechselrichter und/oder Verbraucher und/oder Speicher und/oder wenigstens einem anderen Photovoltaikmodul verbunden sein.

Der Ständer gibt einen Abstand des Photovoltaikmoduls zum Untergrund vor. Der Ständer weist zumindest eine Ausdehnung in Hochrichtung auf. Das Photovoltaikmodul entspricht der Anordnung und weist eine Längsausdehnung und eine Querausdehnung auf. Die Querausdehnung kann in Querrichtung verlaufen. Die Ausrichtung der Längsausdehnung des Photovoltaikmoduls ist unter anderem abhängig von der Ausrichtung des Photovoltaikmoduls zur Hochrichtung. Verläuft die Querausdehnung des Photovoltaikmoduls in Querrichtung, dann verläuft bei einer senkrechten Ausrichtung des Photovoltaikmoduls zur Hochrichtung die Längsausdehnung des Photovoltaikmoduls parallel zur Längsrichtung, bei einer anderen Neigung des Photovoltaikmoduls zur Hochrichtung verläuft die Längsausdehnung des Photovoltaikmoduls in einer Ebene, welche von der Hochrichtung und der Längsrichtung aufgespannt wird.

Eine Oberseite und/oder eine Unterseite des Photovoltaikmoduls umfasst Photovoltaikelemente. Bei einer Ausführung, bei welcher die Oberseite und die Unterseite des Photovoltaikmoduls jeweils Photovoltaikelemente aufweisen, ist eine Seite stärker dem Himmel bzw. einer Strahlungsquelle und/oder einer von der Strahlungsquelle ausgehenden Strahlung zugewandt und die andere Seite ist mehr dem Untergrund bzw. einer am Untergrund reflektierten Strahlung zugewandt.

Bei einer schwenkbaren Anlage kann die Oberseite oder die Unterseite mit den Photovoltaikelementen des Photovoltaikmoduls schräg zur Hochrichtung ausgerichtet und nachjustiert werden, so dass das Photovoltaikmodul möglichst viel Strahlung, insbesondere Solarstrahlung, mit den Photovoltaikelementen auffängt. Bei einer feststehenden Anlage weist das Photovoltaikmodul immer dieselbe Ausrichtung zur Hochrichtung auf. In einer Ruhestellung kann eine schwenkbare Anlage mit nur einer Seite, welche Photovoltaikelemente aufweist, das Photovoltaikmodul derart drehen, dass die Photovoltaikelemente größtenteils dem Untergrund zugewandt sind, um die Photovoltaikelemente vor äußeren Einflüssen zu schützen.

Unter einer Ablauffläche des Photovoltaikmoduls wird im Folgenden die Seite des Photovoltaikmoduls verstanden, welche bei Niederschlag, insbesondere bei Regen, größtenteils dem Himmel zugewandt ist. Dies kann die Oberseite mit den Photovoltaikelementen oder eine Unterseite mit oder ohne Photovoltaikelementen sein. Unter einer Oberkante wird im Folgenden die Kante der Ablauffläche verstanden, welche den höchsten Punkt einnimmt. Unter der Unterkante wird die Kante der Ablauffläche verstanden, welche den tiefsten Punkt einnimmt.

In der Betriebsstellung der erfindungsgemäßen Wasserverteilungsanordnung ist die Ablauffläche größtenteils dem Himmel zugewandt, und die Rückseite der Ablauffläche ist größtenteils dem Untergrund zugewandt. Hierbei sind die Ablauffläche und die Rückseite gegenüber der Horizontalen geneigt.

Durch die Wasserverteilungsanordnung wird das von der geneigten Ablauffläche des Photovoltaikmoduls ablaufende Wasser zu dem von der Ablauffläche abgedeckten Bereich oder eines Abschnitts des abgedeckten Bereichs des Untergrunds geleitet und dort verteilt. Dadurch kann auf ein Bewässern oder ein nachträgliches Aufbringen von Wasser auf diesen Bereich oder diesen Abschnitt des Bereichs verzichtet werden. Weiter können Erosionsschäden des Untergrunds vermieden werden, da der von der Ablauffläche abfließende Wasserstrom über das Element verteilt werden kann.

Zudem kann die erfindungsgemäße Wasserverteilungsanordnung einfach nachgerüstet werden und ist einfach in der Umsetzung.

Da das Wasser nicht mehr vollständig von der Unterkante der Ablauffläche des Photovoltaikmoduls auf den Untergrund im Bereich der Unterkante strömt, kann ein Erosionsschaden des Untergrunds in diesem Bereich vermieden werden.

Weiter kann durch die Verteilung des von der Ablauffläche ablaufenden Wassers durch das Element ein gleichmäßigeres Befeuchten des Untergrunds des abgedeckten Bereichs unterhalb der Ablauffläche ermöglicht werden. Hierbei kann die Verteilung des Wassers auf den von der Ablauffläche abgedeckten Bereich in vorteilhafter Weise durch eine Rauigkeit der Unterseite oder ein Wasseraufnahmevermögen des Elements oder eine Kombination aus Rauigkeit und Wasseraufnahmevermögen vorgegeben werden. Das Wasseraufnahmevermögen des Elements kann durch eine Oberflächenspannung und/oder durch Zwischenräume beeinflusst werden.

Zusätzlich oder alternativ können an einer Unterseite des Elements parallel zur Schwerkraftrichtung angeordnete Ableitelemente in vorteilhafter Weise die Verteilung des Wassers auf den von der Ablauffläche abgedeckten Bereich vorgeben.

Zusätzlich oder alternativ kann die Verteilung des Wassers auf den von der Ablauffläche abgedeckten Bereich in vorteilhafter Weise durch die Anzahl, die Größe und den Abstand der Durchlassöffnungen eines permeabel ausgebildeten Elements eingestellt werden. Des Weiteren können die Abtropfpunkte oder Abtropfbereiche des ablaufenden Wassers durch die Positionen und die Verteilungen der Durchlassöffnungen im Element vorgegeben werden.

Nach einer günstigen Ausgestaltung des Photovoltaikmoduls kann das Photovoltaikmodul unverschwenkbar ausgebildet sein. Durch die Wasserverteilungsanordnung kann das von der Ablauffläche ablaufende Wasser auch ohne das Senkrechtstellen der Ablauffläche zuverlässig auf den von der Ablauffläche abgedeckten Bereich oder zumindest auf einem Abschnitt des von der Ablauffläche abgedeckten Bereichs verteilt werden. Dadurch können Photovoltaikanlagen mit einer Vielzahl von unverschwenkbaren Photovoltaikmodulen errichtet werden, wobei Erosionsschäden vermieden werden können.

Nach einer günstigen Ausgestaltung der Photovoltaikanlage kann das Photovoltaikmodul an der Oberseite und an der Unterseite Photovoltaikelemente aufweisen. Dadurch kann in vorteilhafter Weise am Untergrund reflektierte oder diffuse Strahlung zur Stromerzeugung genutzt werden.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Fig. 1: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem ersten Ausführungsbeispiel der Erfindung;
- Fig. 2: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem zweiten Ausführungsbeispiel der Erfindung;
- Fig. 3: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem dritten Ausführungsbeispiel der Erfindung;
- Fig. 4: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem vierten Ausführungsbeispiel der Erfindung;
- Fig. 5: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem fünften Ausführungsbeispiel der Erfindung;
- Fig. 6: eine schematische Darstellung einer erfindungsgemäßen Photovoltaikanlage mit einer erfindungsgemäßen Wasserverteilungsanordnung für eine gegen eine Schwerkraftrichtung geneigte Ablauffläche nach einem sechsten Ausführungsbeispiel der Erfindung;
- Fig. 7: eine schematische Darstellung eines permeablen Elements der erfindungsgemäßen Wasserverteilungsanordnung aus den Figuren 2 bis 6.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Bevor die Erfindung im Detail beschrieben wird, ist darauf hinzuweisen, dass sie nicht auf die jeweiligen Bauteile der Vorrichtung beschränkt ist, da diese Bauteile variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Im Folgenden verwendete Richtungsterminologie mit Begriffen wie "links", "rechts", "oben", "unten", "davor", "dahinter", "danach" und dergleichen dient lediglich dem besseren Verständnis der Figuren und soll in keinem Fall eine Beschränkung der Allgemeinheit darstellen.

Die dargestellten Komponenten und Elemente, deren Auslegung und Verwendung können im Sinne der Überlegungen eines Fachmanns variieren und an die jeweiligen Anwendungen angepasst werden.

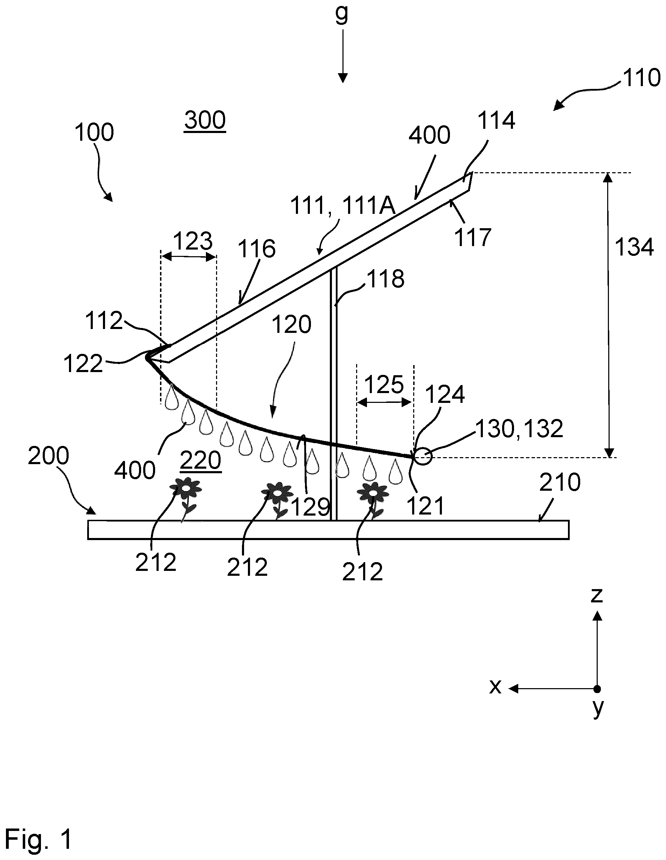

Die Figuren 1 bis 6 zeigen jeweils eine Ausführung einer erfindungsgemäßen Photovoltaikanlage 110 mit einer erfindungsgemäßen Wasserverteilungsanordnung 100. Die Ausführungen unterscheiden sich durch die Ausführung der erfindungsgemäßen Wasserverteilungsanordnungen 100.

Zunächst wird auf die Gemeinsamkeiten und im weiteren Verlauf wird auf die Unterschiede der Ausführungsbeispiele der erfindungsgemäßen Wasserverteilungsanordnung 100 eingegangen.

Wie aus den Figuren 1 bis 6 ersichtlich ist, weist der dargestellte Untergrund 200 eine flache Oberfläche 210 und eine Bepflanzung 212 auf. Die erfindungsgemäße Photovoltaikanlage 110 umfasst mehrere Photovoltaikmodule 111A. Die Photovoltaikmodule 111A können auch auf einer geneigten Oberfläche 210 und/oder auf einer unebenen Oberfläche 210 und/oder auf einer unbepflanzten Oberfläche 210 angeordnet sein. Ebenfalls können sich auf der Oberfläche 210 Gefäße zur Bepflanzung 212 befinden.

Die erfindungsgemäße Wasserverteilungsanordnung 100 kann auch an Photovoltaikmodulen 111A angeordnet werden, welche auf einer geneigten Oberfläche 210 und/oder auf einer unebenen Oberfläche 210 und/oder auf einer unbepflanzten Oberfläche 210 und/oder auf einer Oberfläche 210 mit Gefäßen zur Bepflanzung angeordnet sind.

Des Weiteren kann die erfindungsgemäße Wasserverteilungsanordnung 100 auch für andere Anordnungen 111, als für Photovoltaikmodule 111A von Photovoltaikanlagen 110 verwendet werden.

In einem alternativen nicht dargestellten Ausführungsbeispiel kann die Anordnung 111 eine Baugruppe oder ein Element mit einer für Wasser 400 im Wesentlichen undurchlässigen Fläche sein.

Die Baugruppe oder das Element kann ein einteiliges oder mehrteiliges Dach oder ein überstehendes Element oder ein Spiegel oder ein solarer Flachkollektor oder eine überstehende Baugruppe oder das Photovoltaikmodul 111A oder eine andere Baugruppe oder eine Kombination der genannten Elemente und Baugruppen sein.

Die Anordnung 111, welche in den dargestellten Ausführungsbeispielen als Photovoltaikmodul 111A ausgebildet ist, weist eine Längsausdehnung und eine Querausdehnung auf. Die Grundfläche der Anordnung 111, welche insbesondere von der Längsausdehnung und der Querausdehnung aufgespannt wird, kann quadratisch oder rechteckig sein. Es sind aber auch andere Grundflächen vorstellbar.

Wie aus den Figuren 1 bis 6 weiter ersichtlich ist, umfasst die erfindungsgemäße Photovoltaikanlage 110 jeweils wenigstens einen Ständer 118, welcher die als Photovoltaikmodul 111A ausgebildete Anordnung 111 über dem Untergrund 200 hält. Der Ständer 118 gibt einen vertikalen Abstand der als Photovoltaikmodul 111A ausgebildeten Anordnung 111 zum Untergrund 200 vor. Der Ständer 118 weist zumindest eine Ausdehnung in Hochrichtung z auf. Die Hochrichtung z des globalen Koordinatensystems verläuft hierbei entgegengesetzt zur Schwerkraftrichtung g. Die globale Querrichtung y verläuft im dargestellten Ausführungsbeispiel parallel zur Unterkante 112 der Ablauffläche 116 der Anordnung 111. Weiter verlaufen eine Längsrichtung x und die Querrichtung y des globalen Koordinatensystems senkrecht zueinander und senkrecht zur Hochrichtung z.

Die Querausdehnung der Anordnung 111 verläuft im dargestellten Ausführungsbeispiel in Querrichtung y. Die Ausrichtung der Längsausdehnung der Anordnung 111 ist abhängig von der Ausrichtung der Anordnung 111 zur Hochrichtung z.

Bei einer senkrechten Ausrichtung der Anordnung 111 zur Hochrichtung z verläuft die Längsausdehnung der Anordnung 111 parallel zur Längsrichtung x. Bei einer anderen Neigung der Anordnung 111 zur Hochrichtung z, wie sie in den Figuren 1 bis 6 dargestellt ist, verläuft die Längsausdehnung der Anordnung 111 in einer Ebene, welche von der Hochrichtung z und der Längsrichtung x aufgespannt wird.

Wenigstens eine Oberfläche, welche eine Oberseite oder eine Unterseite der Anordnung 111 sein kann, umfasst Photovoltaikelemente, welche in einer stromerzeugenden Stellung des Photovoltaikmoduls 111A typischerweise der Sonne bzw. größtenteils dem Himmel 300 zugewandt sind.

Bei einer schwenkbaren Photovoltaikanlage 110 kann die Oberfläche mit den Photovoltaikelementen der Anordnung 111 bzw. des Photovoltaikmoduls 111A schräg zur Hochrichtung z ausgerichtet sein und nachjustiert werden, so dass die Anordnung 111 möglichst viel Solarstrahlung mit den Photovoltaikelementen auffängt.

Bei einer feststehenden Photovoltaikanlage 110 weist die Anordnung 111 immer dieselbe Ausrichtung zur Hochrichtung z auf. In einer Ruhestellung kann eine schwenkbare Photovoltaikanlage 110 die Anordnung 111 derart drehen, dass die Photovoltaikelemente dem Untergrund 200 zugewandt sind, um die Photovoltaikelemente vor äußeren Einflüssen zu schützen.

Die Ablauffläche 116 des Photovoltaikmoduls 111A bzw. der Anordnung 111 entspricht der Seite der Anordnung 111, welche bei Niederschlag, insbesondere bei Regen, größtenteils dem Himmel 300 zugewandt ist. Dies kann die Oberseite mit den Photovoltaikelementen oder eine Unterseite ohne Photovoltaikelemente sein. Die Oberkante 114 ist die Kante der Ablauffläche 116, welche den höchsten Punkt einnimmt. Die Unterkante 112 ist die Kante der Ablauffläche 116, welche den tiefsten Punkt einnimmt. In der Betriebsstellung der erfindungsgemäßen Wasserverteilungsanordnung 100 ist die Ablauffläche 116 größtenteils dem Himmel 300 zugewandt. Eine Rückseite 117 der Ablauffläche 116 ist die dem Himmel 300 größtenteils abgewandte Seite der Ablauffläche 116.

In einem alternativen, nicht dargestellten Ausführungsbeispiel der Photovoltaikanlage 110 weist das Photovoltaikmodul 111A an der Oberseite und an der Unterseite Photovoltaikelemente auf. Hierbei ist eine der Seiten dem Himmel 300 größtenteils zugewandt und bildet die Ablauffläche 116 aus. Eine der Seiten ist dem Himmel 300 größtenteils abgewandt und bildet die Rückseite 117 aus. Hierbei kann je nach Bedarf die Oberseite oder die Unterseite dem Himmel 300 größtenteils zugewandt sein und entsprechend die Ablauffläche 116 ausbilden.

Ein Photovoltaikmodul 111A, welches an der Oberseite und an der Unterseite Photovoltaikelemente aufweist, kann auch aus am Untergrund 200 reflektierter Strahlung und/oder diffuser Strahlung Strom erzeugen.

Die in den Figuren 1 bis 6 dargestellten Photovoltaikanlagen 110 sind unverschwenkbar ausgebildet. Der Ständer 118 kann aber auch so konstruiert sein, dass ein Verschwenken der Anordnung 111 bzw. des Photovoltaikmoduls 111A möglich ist.

Wie aus den Figuren 1 bis 6 weiter ersichtlich ist, umfasst die erfindungsgemäße Wasserverteilungsanordnung 100 für die gegen die Schwerkraftrichtung g geneigte Ablauffläche 116 des Photovoltaikmoduls 111A bzw. der Anordnung 111, wobei die Ablauffläche 116 den Untergrund 200 wenigstens in einem Bereich 220 abdeckt, wenigstens ein Element 120 mit einem ersten Endbereich 122, welcher in der Betriebsstellung an der Unterkante 112 der Ablauffläche 116 befestigt ist.

In den in den Figuren 1 bis 6 dargestellten Ausführungsbeispielen umfasst die erfindungsgemäße Wasserverteilungsanordnung 100 ein einziges Element 120. Es sind aber auch Ausführungen mit mehreren Teilelementen vorstellbar, welche zusammen das Element 120 ausbilden.

In der Figur 1 ist das Element 120 als impermeables Element 120 ausgebildet. Das impermeable Element 120 kann als Folie oder Blech oder als Element aus einem anderen geeigneten biegbaren oder verformbaren Material gebildet sein.

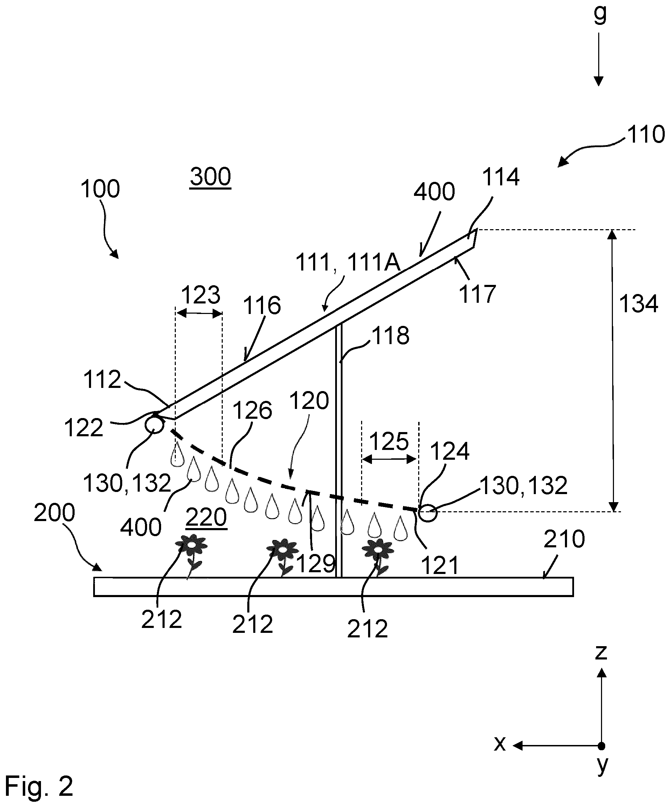

In den Figuren 2 bis 6 ist das Element 120 als permeables Element 120 ausgebildet. Das permeable Element 120 kann als Netz und/oder als Tuch und/oder als Sieb und/oder als Lochblech und/oder als Schar nebeneinander verlaufender Fasern ausgebildet sein. Ein Lochblech oder ein Sieb ist in Längsrichtung x bzw. in Längsausdehnungsrichtung formstabiler als ein Netz und/oder Tuch. Ein Tuch und/oder ein Netz sollte daher, insbesondere straff, gespannt sein. Bei einem Tuch und/oder Netz kann das Wasser 400 durch die von Fasern gebildeten Durchlassöffnungen 126 strömen und an der Unterseite 129 des Tuchs und/oder Netz abtropfen. Bei einem Lochblech und/oder Sieb strömt das Wasser 400 an einer Oberseite entlang und tropft durch die Durchlassöffnungen 126 ab, oder gelangt durch die Durchlassöffnungen zur 126 zu Unterseite 129 des Lochblechs und/oder Siebs und tropft von dort ab.

Die in den Figuren 2 bis 6 dargestellten Anordnungen und Verläufe des Elements 120 sind selbstverständlich auch mit einem impermeablen Element 120 umsetzbar.

Im weiteren Verlauf wird auf die Unterscheidung zwischen permeables und impermeables Element weitestgehend verzichtet.

Wie aus den Figuren 1 bis 6 weiter ersichtlich ist, bildet das Element 120 eine Verlängerung der Ablauffläche 116 aus, wobei Wasser 400 von der Ablauffläche 116 zum Element 120 leitbar ist. Das Element 120 ist zumindest teilweise unter die korrespondierende Ablauffläche 116 geführt und Wasser 400 gelangt über eine dem Untergrund 200 zugewandte Unterseite 129 des Elements 120 zum Untergrund 200, wodurch eine fluidische Verbindung zwischen der Ablauffläche 116 und zumindest einem Abschnitt des von der Ablauffläche 116 abgedeckten Bereichs 220 entsteht. Dadurch kann das von der Ablauffläche 116 abfließende Wasser 400 über das Element 120 zumindest zu einem Abschnitt des von der Ablauffläche 116 abgedeckten Bereichs 220 des Untergrunds 200 geleitet werden.

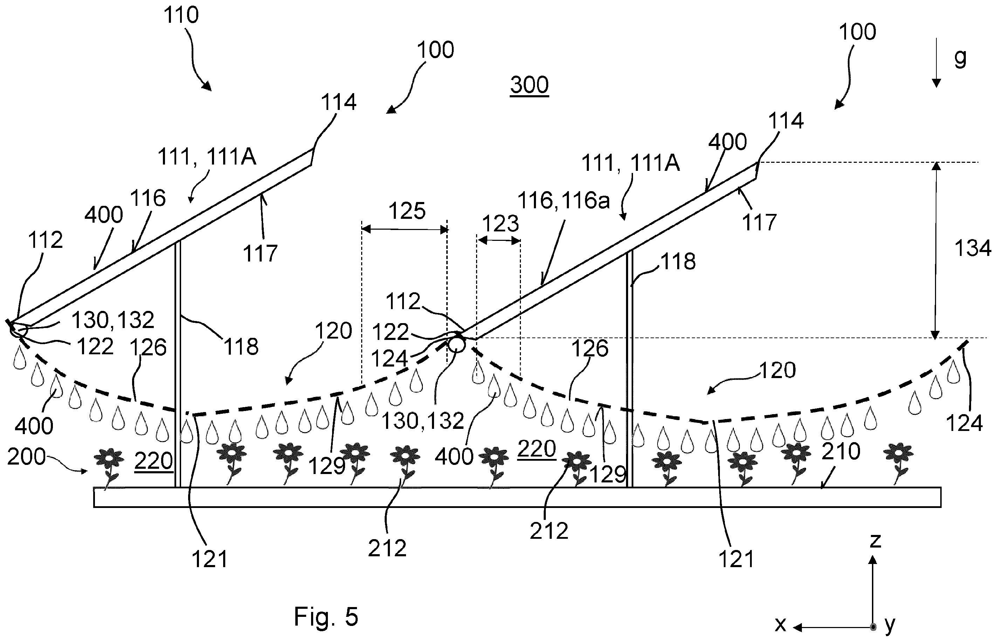

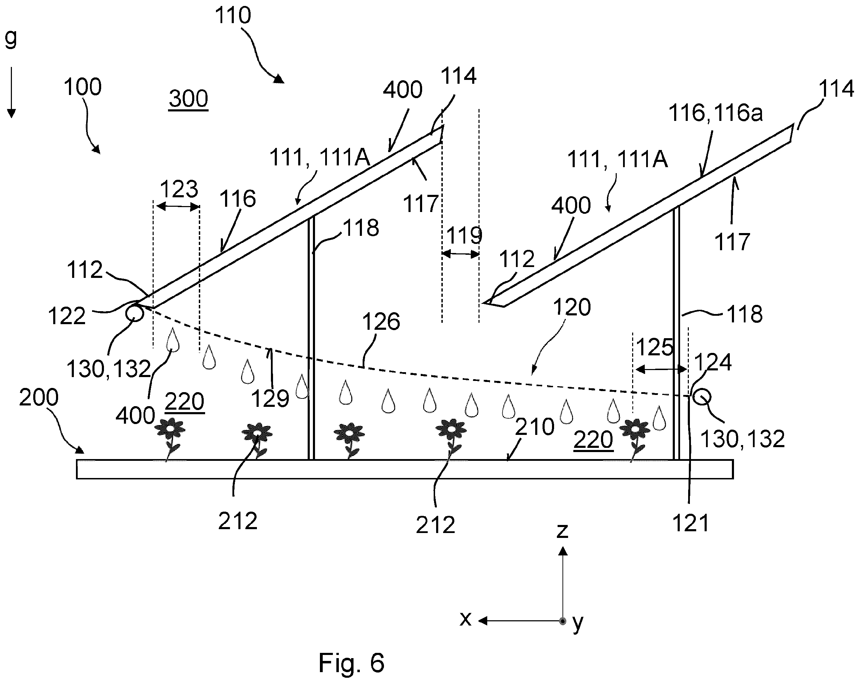

Wie aus den Figuren 1 bis 4 und aus Figur 6 bei der zweiten Ablauffläche 116, 116a weiter ersichtlich ist, ist ein zweiter Endbereich 124 des Elements 120 unter der Ablauffläche 116 angeordnet. Dadurch überlappt das Element 120 den von der Ablauffläche 116 abgedeckten Bereich 220 nicht vollständig. In einer alternativen, in Figur 5 dargestellten Ausgestaltung kann der zweite Endbereich 124 des Elements 120 in Längsrichtung x hinter der Oberkante 114 oder fluchtend zur Oberkante 114 angeordnet sein, damit das Element 120 den von der Ablauffläche 116 abgedeckten Bereich 220 vollständig überlappt. In einem weiteren nicht dargestellten Ausführungsbeispiel kann das Element 120 den von der Ablauffläche 116 abgedeckten Bereich 220 lediglich zur Hälfte überlappen.

Wie aus den Figuren 1 bis 6 ersichtlich ist, gelangt das Wasser 400 über den ersten Endbereich 122 des Elementes 120 auf die dem abgedeckten Bereich 220 zugewandte Unterseite 129 des Elements 120 und topft von dort über dem abgedeckten Bereich 220 ab.

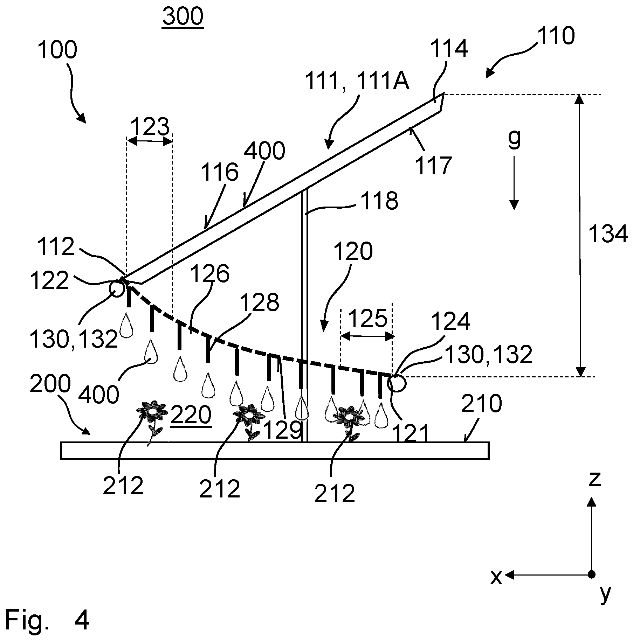

Insbesondere in dem in Figur 1 dargestellten ersten Ausführungsbeispiel der erfindungsgemäßen Wasserverteilungsanordnung 100 geben eine Rauigkeit der Unterseite 129 und/oder ein sich durch eine Oberflächenspannung und/oder durch Zwischenräume ergebende Wasser-Aufnahmevermögen des Elements 120 Abtropfbereiche an der Unterseite 129 vor. Alternativ können, wie in Figur 4 dargestellt ist, an der Unterseite 129 des Elements 120 angeordnete und parallel zur Schwerkraftrichtung g verlaufende Ableitelemente 128 Abtropfbereiche an der Unterseite 129 vorgeben.

Wie aus Figur 1 weiter ersichtlich ist, ist das Element 120 derart geformt, dass die in dem abgedeckten Bereich 220 und der Ablauffläche 116 abgewandte Seite des ersten Endbereichs 122 des Elements 120 durch Umlenken des Elements 120 unter die Ablauffläche 116, dem abgedeckten Bereich 220 zugewandt und der Ablauffläche 116 abgewandt ist. Eine mögliche dargestellte Umsetzung ist, dass das Element 120 mit einer Unterseite des ersten Bereichs 122 auf der Oberseite des unteren Rands im Bereich der Unterkante 112 auf der Ablauffläche 116 aufliegt. Dadurch kann das Wasser 400 im ersten Endbereich 122 des Elements 120 auf die dem Untergrund 220 und der Ablauffläche 116 abgewandten Seite des Elements 120 fließen. Diese Seite des Elements 120 ist im Bereich des Elements 120, welcher unter der Ablauffläche 116 angeordnet ist, dem abgedeckten Bereich 220 zugewandt und bildet in diesem Bereich die Unterseite 129 des Elements 120 aus. Im dargestellten Ausführungsbeispiel ist die Kurve eng, in welcher das Element 120 umgelenkt wird, es sind auch Kurven bzw. Verläufe mit größerem Radius vorstellbar.

Wie aus den Figuren 2 bis 6 weiter ersichtlich ist, gelangt das Wasser 400 in diesen Ausführungsbeispielen ebenfalls im ersten Endbereich 122 zum Element 120. Im Gegensatz zu dem in Figur 1 dargestellten ersten Ausführungsbeispiel ist das Element 120 in den, in Figur 2 bis 6 dargestellten Ausführungsbeispielen permeabel ausgebildet und umfasst Durchlassöffnungen 126, durch welche das Wasser 400 über dem abgedeckten Bereich 220 abtropft.

Wie aus den Figuren 2 bis 5 weiter ersichtlich ist, geben die Durchlassöffnungen 126 Abtropfpunkte für das Wasser 400 vor. Die Durchlassöffnungen 126 können gitterförmig mit einem Abstand von einem Zentimeter zueinander angeordnet sein.

Es sind aber auch andere Anordnungen der Durchlassöffnungen 126 mit anderen Abständen vorstellbar.

Zudem kann auch bei den in den Figuren 2 bis 6 dargestellten Ausführungsbeispielen der erfindungsgemäßen Wasserverteilungsanordnung 100 die Rauigkeit der Unterseite 129 und/oder ein sich durch eine Oberflächenspannung und/oder durch Zwischenräume ergebende Wasser-Aufnahmevermögen des Elements 120 Abtropfbereiche an der Unterseite 129 vorgeben.

Alternativ können, wie in Figur 4 dargestellt ist, an der Unterseite 129 des Elements 120 angeordnete und parallel zur Schwerkraftrichtung g verlaufende Ableitelemente 128 Abtropfbereiche an der Unterseite 129 vorgeben.

Wie aus den Figuren 1 bis 6 weiter ersichtlich ist, ist das Element 120 gegen die Schwerkraftrichtung g geneigt. Es ist auch eine senkrechte Anordnung des Elements 120 zur Schwerkraftrichtung g vorstellbar.

In einem nicht näher dargestellten Ausführungsbeispiel der erfindungsgemäßen Wasserverteilungsanordnung 100 kann das Element 120 aus optisch transparentem Material ausgebildet sein. Beispielsweise kann das Element 120 aus Nylon bzw. aus Nylonfäden oder aus transparentem Kunststoff, insbesondere einer transparenten Kunststofffolie, oder anderem geeigneten Material ausgebildet sein. Dadurch kann eine Strahlung auf die Rückseite 117 der Ablauffläche 116 gelangen. Dies ist insbesondere bei Photovoltaikmodulen 111A mit Photovoltaikelementen auf einer Oberseite und einer Unterseite vorteilhaft. So können auch Photovoltaikelemente, welche auf der größtenteils dem Untergrund 200 zugewandten Seite angeordnet sind, Strom aus beispielsweise am Untergrund 200 reflektierter Strahlung und/oder aus diffuser Strahlung erzeugen.

In einem weiteren, nicht näher dargestellten Ausführungsbeispiel der erfindungsgemäßen Wasserverteilungsanordnung 100 kann eine Lichtdurchlässigkeit des Elements 120 zwischen dem ersten Endbereich 122 und dem zweiten Endbereich 124 zunehmen. Hierbei kann die Lichtdurchlässigkeit, insbesondere konstant, zunehmen.

Alternativ können vorgegebene Bereiche des Elements 120 lichtdurchlässiger sein als andere Bereiche. Die Lichtdurchlässigkeit des Elements 120 kann an den Untergrund 200 angepasst sein. In einem alternativen Ausführungsbeispiel kann die Lichtdurchlässigkeit des Elements auch konstant sein. Des Weiteren kann das Element 120 ab einem gewissen Punkt in Längsrichtung x nach dem ersten Endbereich 122 eine erhöhte Lichtdurchlässigkeit aufweisen.

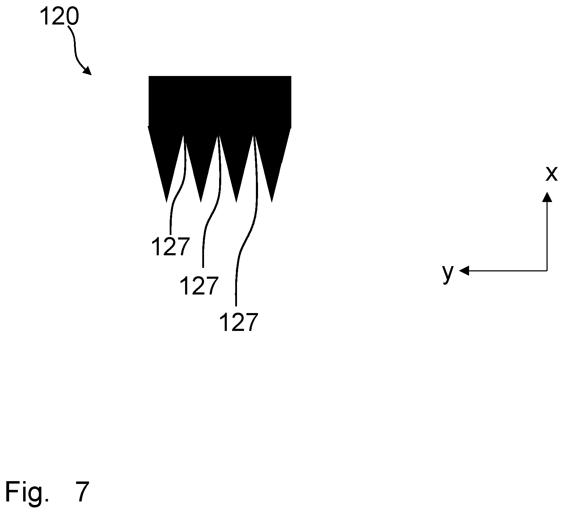

Wie aus Figur 7 ersichtlich ist, kann das Element 120 in Längsrichtung x bzw. in Längsausdehnungsrichtung verlaufende Einschnitte 127 aufweisen. Dadurch kann die rückseitige Einstrahlung auf möglicherweise bifaziale Photovoltaikmodule erhöht und die Windlasten auf das Element 120 reduziert werden.

In Figur 7 ist das Element 120 permeabel als Netz ausgebildet. Hierbei werden die Einschnitte, beispielsweise durch Ausschneiden von Dreiecken erzielt. Alternativ kann nach dem ersten Endbereich 122 auch auf die Fasern des Netzes in Querausdehnungsrichtung verzichtet werden und die Fasern in Längsausdehnungsrichtung können zu den Dreiecken geformt werden, indem man sie am zweiten Endbereich 124 miteinander verbindet. Weiter können in Querausdehnungsrichtung verlaufende Fasern aufgetrennt werden. Hierbei kann das Netz in den Bereichen mit den Einschnitten weiterhin dieselbe Wasserdurchlässigkeit aufweisen. Alternativ können die Einschnitte zusätzlich Durchlassöffnungen 126 ausbilden. In einem weiteren alternativen Ausführungsbeispiel kann auch eine Schar nebeneinander verlaufender Fasern als permeables Element 120 verwendet werden.

In einem nicht dargestellten Ausführungsbeispiel kann auch ein impermeables Element 120 dünnere Bereiche oder lichtdurchlässigere Bereiche aufweisen.

Das in Figur 1 dargestellte erste Ausführungsbeispiel der erfindungsgemäßen Wasserverteilungsanordnung 100 unterscheidet sich im Wesentlichen dadurch von dem in Figur 2 dargestellten Ausführungsbeispiel der erfindungsgemäßen Wasserverteilungsanordnung 100, dass das Element 120 im ersten Ausführungsbeispiel nicht permeabel ist. Ansonsten trifft die Beschreibung des zweiten Ausführungsbeispiels in Figur 2 auch auf das erste Ausführungsbeispiel in Figur 1 zu.

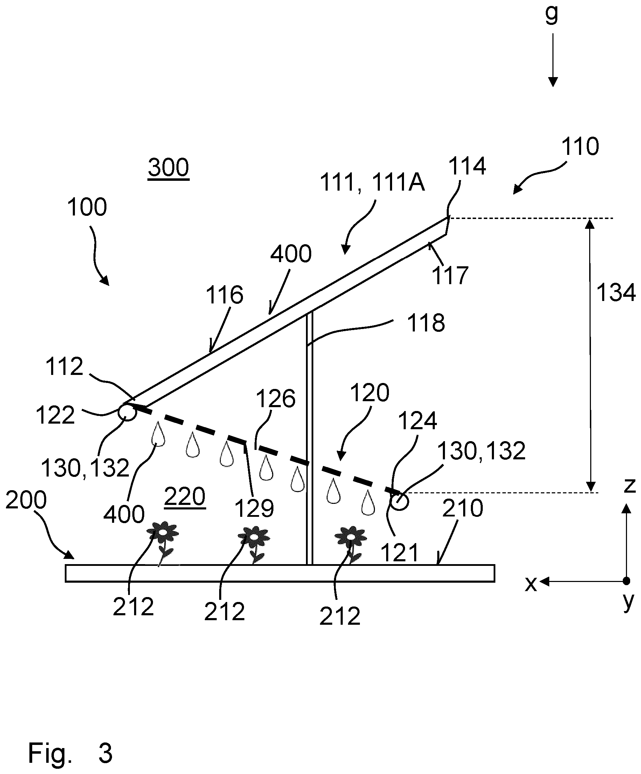

Das in Figur 3 dargestellte dritte Ausführungsbeispiel der erfindungsgemäßen Wasserverteilungsanordnung 100 unterscheidet sich unter anderem von den in Figur 1, 2 und 4 bis 6 dargestellten Ausführungsbeispielen der erfindungsgemäßen Wasserverteilungsanordnung 100 durch die Neigung des Elements 120.

In dem in Figur 3 dargestellten dritten Ausführungsbeispiel der erfindungsgemäßen Wasserverteilungsanordnung 100 ist die Neigung des Elements 120 konstant.

In den in den Figuren 1, 2, 4 und 6 dargestellten Ausführungsbeispielen der erfindungsgemäßen Wasserverteilungsanordnung 100 nimmt die Neigung des Elements 120 in Längsrichtung x vom ersten Endbereich 122 zum zweiten Endbereich 124 ab.

Dadurch ist die Neigung in einem an den ersten Endbereich 122 angrenzenden ersten Abschnitt 123 steiler als in einem an einen zweiten Endbereich 124 angrenzenden zweiten Abschnitt 125.

Wie aus den Figuren 1, 2, 3, 4 und 6 weiter ersichtlich ist, ist der tiefste Punkt des Elements 120 der zweite Endbereich 124 des Elements 120. Hierbei ist in den dargestellten Ausführungsbeispielen der zweite Endbereich 124 der einzige Tiefpunkt 121 ist des Elements 120.

Wie aus den Figuren 2 bis 6 weiter ersichtlich ist, ist eine Durchlässigkeit des permeablen Elements 120 in den dargestellten Ausführungsbeispielen zwischen dem ersten Endbereich 122 und dem zweiten Endbereich 124 konstant. Die Durchlassöffnungen 126 des permeablen Elements 120 sind in den dargestellten Ausführungsbeispielen gleichmäßig verteilt und weisen ähnliche Querschnitte auf.

In einem alternativen nicht dargestellten Ausführungsbeispiel nimmt die Durchlässigkeit des permeablen Elements 120 in Längsrichtung x bzw. in Längsausdehnungsrichtung zu. Hierbei kann eine Anzahl und/oder eine Größe der Querschnitte der Durchlassöffnungen 126 vom ersten Endbereich 122 zum zweiten Endbereich 124 zunehmen.

Die Abstände zwischen den Durchlassöffnungen 126 können abnehmen. Dadurch nimmt die Durchlässigkeit des permeablen Elements 120 in Längsrichtung x bzw. in Längsausdehnungsrichtung zu. Es ist auch eine Kombination aus Abständen, Querschnittsgrößen und Verteilung der Durchlassöffnungen zum Einstellen der Durchlässigkeit vorstellbar.

Die in Figur 5 und 6 dargestellten Ausführungsbeispiele der erfindungsgemäßen Wasserverteilungsanordnung 100 unterscheiden sich von den in den Figuren 1 bis 4 dargestellten erfindungsgemäßen Wasserverteilungsanordnungen 100 dadurch, dass der zweite Endbereich 124 des Elementes 120 zu einer weiteren Ablauffläche 116a, wie in Figur 5 im fünften Ausführungsbeispiel dargestellt ist, oder unter eine weitere Ablauffläche 116a, wie in Figur 6 im sechsten Ausführungsbeispiel dargestellt ist, geführt ist.

In dem in Figur 5 dargestellten fünften Ausführungsbeispiel der erfindungsgemäßen Wasserverteilungsanordnung 100 ist der Verlauf des Elements 120 von dem ersten Endbereich 122 ausgehend bis zu einem Tiefpunkt 121 abfallend und steigt ab dem Tiefpunkt 121 zu dem zweiten Endbereich 124 hin an. Der tiefste Punkt des Elements 120 ist der Tiefpunkt 121. Im dargestellten fünften Ausführungsbeispiel ist die Neigung in einem an den ersten Endbereich 122 angrenzenden ersten Abschnitt 123 genauso steil wie die Neigung in einem an einen zweiten Endbereich 124 angrenzenden zweiten Abschnitt 125. Die Neigungen der an den Tiefpunkt 121 angrenzenden Abschnitte sind flacher als die Neigungen der an die Endbereiche angrenzenden Abschnitte 123, 125. Es sind aber auch andere Neigungen vorstellbar.

In dem in Figur 5 dargestellten fünften Ausführungsbeispiel der erfindungsgemäßen Wasserverteilungsanordnung 100 werden zwei Ablaufflächen 116, 116a durch ein Element 120 miteinander verbunden. Dadurch kann das dargestellte Element 120 sowohl Wasser 400 von der vorderen Ablauffläche 116 als auch Wasser von der hinteren Ablauffläche 116a aufnehmen und verteilen. Hierbei wird der Abstand 119 zwischen den Ablaufflächen 116, 116a durch das Element 120 überbrückt.

In dem in Figur 5 dargestellten fünften Ausführungsbeispiel der erfindungsgemäßen Wasserverteilungsanordnung 100 ist die weitere Ablauffläche 116a mit zwei Elementen 120 gekoppelt. In einem alternativen nicht dargestellten Ausführungsbeispiel oder bei Ablaufflächen 116, hinter welchen keine weiteren Ablaufflächen 116a angeordnet sind, kann die weitere Ablauffläche 116a lediglich mit dem Element 120 der vorderen Ablauffläche 116 gekoppelt sein.

Das in Figur 6 dargestellte sechste Ausführungsbeispiel der erfindungsgemäßen Wasserverteilungsanordnung 100 unterscheidet sich von dem in Figur 5 dargestellten fünften Ausführungsbeispiel der erfindungsgemäßen Wasserverteilungsanordnung 100 dadurch, dass der zweite Endbereich 124 nicht mit der Unterkante 112 der weiteren Ablauffläche 116a gekoppelt ist, sondern unter die weitere Ablauffläche 116a geführt ist. Hierbei wird der Abstand 119 zwischen den Ablaufflächen 116, 116a durch das Element 120 überbrückt. Zudem ist der Abstand zwischen den Ablaufflächen 116, 116a in Figur 6 kleiner als der Abstand 119 zwischen den Ablaufflächen 116, 116a in Figur 5. Die Abstände 119 können frei gewählt werden, so dass auch das fünfte Ausführungsbeispiel kleinere Abstände 119 und das sechste Ausführungsbeispiel größere Abstände zwischen den Ablaufflächen 116, 116a aufweisen kann.

Die Neigung des Elements 120 ist im sechsten Ausführungsbeispiel der erfindungsgemäßen Wasserverteilungsanordnung 100 von dem ersten Endbereich 122 ausgehend zum zweiten Endbereich 124 abfallend. Der tiefste Punkt des Elements 120 ist hierbei der zweite Endbereich 124. Es ist aber auch ein Verlauf mit konstanter Neigung oder ein Verlauf mit einem Tiefpunkt 121 vorstellbar.

In dem in Figur 6 dargestellten sechsten Ausführungsbeispiel der erfindungsgemäßen Wasserverteilungsanordnung 100 ist die weitere Ablauffläche 116, 116a mit einem einzigen Element 120 gekoppelt.

In einem alternativen nicht dargestellten Ausführungsbeispiel kann die weitere Ablauffläche 116, 116a an der Unterkante 112 ebenfalls ein Element 120 aufweisen, welches unter eine weitere Ablauffläche 116a geführt ist. Hierbei ist der Abstand 119 zwischen den Ablaufflächen 116, 116a durch das Element 120 überbrückt. Dadurch kann das dargestellte Element 120 sowohl Wasser 400 von der vorderen Ablauffläche 116 als auch Wasser 400 von der Unterkante 112 der weiteren Ablauffläche 116a aufnehmen und verteilen.

Durch das Überbrücken der Abstände 119 zwischen zwei Ablaufflächen 116, 116a durch das Element 120 können, in den in Figur 5 und 6 dargestellten Ausführungsbeispielen, das Element 120 und korrespondierenden Ablaufflächen 116, 116a einen Witterungsschutz und/oder einen Insektenschutz ausbilden.

In dem in Figur 5 dargestellten Ausführungsbeispiel der erfindungsgemäßen Wasserverteilungsanordnung 100 kann eine Durchlässigkeit des permeabel ausgebildeten Elements vom ersten Endbereich 122 zum Tiefpunkt 121 und vom zweiten Endbereich zum Tiefpunkt 121 zunehmen. Es sind aber auch konstante oder andere Durchlässigkeiten vorstellbar.

Wie aus den Figuren 1 bis 6 weiter ersichtlich ist, umfassen die dargestellten erfindungsgemäßen Wasserverteilungsanordnungen 100 eine Stützstruktur 130, welche das Element 120 abstützt.

Wie aus Figur 2 bis 6 weiter ersichtlich ist, umfasst die Stützstruktur 130 in den dargestellten Ausführungsbeispielen zwei in Querrichtung y bzw. in Querausdehnungsrichtung des Elements 120 verlaufende Stützelemente 132, wobei ein in Querrichtung y bzw. in Querausdehnungsrichtung verlaufendes Stützelement 132 den ersten Endbereich 122 und ein weiteres in Querrichtung y bzw. in Querausdehnungsrichtung verlaufendes Stützelement 132 den zweiten Endbereich 124 des Elements 120 abstützt. Die Endbereiche 122, 124 können um die jeweiligen in Querrichtung y bzw. in Querausdehnungsrichtung verlaufenden Stützelemente 132 gewickelt sein.

In dem in Figur 1 dargestellten ersten Ausführungsbeispiel weist die Stützstruktur 130 lediglich ein in Querrichtung y bzw. in Querausdehnungsrichtung verlaufendes Stützelement 132 auf, welches den zweiten Endbereich 124 des Elements 120 abstützt. In einer alternativen Ausgestaltung ist auch ein Stützelement 132 für den ersten Endbereich 122 vorstellbar.

Die in Querrichtung y bzw. in Querausdehnungsrichtung des Elements 120 verlaufenden Stützelemente 132 können als Rollen oder Stäbe oder Stangen oder Rohre oder Seile oder Drähte aus geeignetem Material beispielsweise Holz oder Metall oder Kunststoff ausgebildet sein. Das in Querrichtung y bzw. in Querausdehnungsrichtung verlaufende Stützelement 132 für den ersten Endbereich 122 kann zudem Teil einer Befestigungsanordnung, beispielsweise einer Klammer oder eines Befestigungsdrahtes sein.

Das weitere in Querrichtung y bzw. in Querausdehnungsrichtung des Elements 120 verlaufende Stützelement 132 für den zweiten Endbereich 124 kann zudem mit dem Ständer 118 oder der Anordnung 111 verbunden sein, um mit einem vorgegebenen Abstand zur Anordnung 111 oder mit einem vorgegebenen Abstand zum Untergrund 200 fixiert zu sein.

Das Element 120 ist zwischen den beiden in Querrichtung y bzw. in Querausdehnungsrichtung des Elements 120 verlaufenden Stützelementen 132 gespannt.

In einem alternativen, nicht dargestellten Ausführungsbeispiel kann der zweite Endbereich 124 des Elements 120 über ein Verbindungselement mit der Oberkante 114 der Ablauffläche 116 und/oder mit wenigstens einer Seite, insbesondere wenigstens einem Rand, der Ablauffläche und/oder dem Ständer 118 verbunden sein. Ein vertikaler Abstand 134 des zweiten Endbereichs 124 zur Oberkante 114 ist durch eine Länge des Verbindungselements vorgegeben. Hierbei kann das Verbindungselement als längenverstellbare Stange oder als in der Länge verstellbarer Seilzug ausgebildet sein. Durch das längenverstellbare Verbindungselement kann der vertikale Abstand 134 des zweiten Endbereichs 124 zum Untergrund 200 variabel sein, so dass beispielsweise für Feldarbeiten das Element 120 angehoben werden kann.

Des Weiteren kann der vertikale Abstand 134 des zweiten Endbereichs 124 zur Oberfläche 210 vergrößert werden, wenn der abgedeckte Bereich 220 bearbeitet wird, oder wenn die Pflanzen eine gewisse Größe erreicht haben. Des Weiteren kann der vertikale Abstand 134 des zweiten Endbereichs 124 zur Oberkante 114 verändert werden, um die Neigung des Elements 120 an eine Stärke des Regens oder an eine Stärke des Windes oder an die Positionierung der Pflanzen oder an die Positionierung des wenigstens einen Behälters anzupassen.

In einem alternativen nicht dargestellten Ausführungsbeispiel der erfindungsgemäßen Wasserverteilungsanordnung 100 kann die Stützstruktur 130 nur ein in Querrichtung y bzw. in Querausdehnungsrichtung des Elements 120 verlaufendes Stützelement 132 aufweisen, welches entweder mit dem ersten Endbereich 122 oder dem zweiten Endbereich 124 verbunden ist.

In einem weiteren alternativen nicht dargestellten Ausführungsbeispiel der erfindungsgemäßen Wasserverteilungsanordnung 100 umfasst die Stützstruktur 130 wenigstens ein in Längsausdehnungsrichtung des Elements 120 verlaufendes Stützelement. Dieses wenigstens eine in Längsausdehnungsrichtung verlaufende Stützelement gibt die Neigung des Elements 120 vor und ist insbesondere bei Tüchern, Netzen, dünnen Folien und dünnen Blechen vorteilhaft. Beispielweise kann an den Seitenrändern des Elements 120 jeweils ein in Längsausdehnungsrichtung verlaufendes Stützelement angeordnet sein. Dadurch kann das Element 120 zwischen diese in Längsausdehnungsrichtung verlaufende Stützelemente gespannt werden. Die in Längsausdehnungsrichtung verlaufenden Stützelemente können zusätzlich oder alternativ zu dem wenigstens einen in Querausdehnungsrichtung verlaufenden Stützelement 132 angeordnet werden. Zudem können Stützelemente 132 außer an den Rändern des Elements 120 auch mittig am Element 120 angeordnet sein, um dieses abzustützen. Die Stützelemente 132 können das Element 120 spannen und eine Faltenbildung oder ein Durchhängen des Elements 120 zumindest erschweren.

Wie aus Figur 4 weiter ersichtlich ist, sind in dem dargestellten vierten Ausführungsbeispiel der erfindungsgemäßen Wasserverteilungsanordnung 100 an einer Unterseite 129 des Elements 120 mehrere parallel zur Schwerkraftrichtung g ausgerichtete Ableitelemente 128 angeordnet.

Die Ableitelemente 128 können in das Element 120, beispielsweise bei einem Stoff oder Netz, eingearbeitet sein, oder sie können auf die Unterseite 129 aufgebracht sein. Die Ableitelemente 128 können als Fäden oder Bänder oder Drähte ausgebildet sein. Die Ableitelemente 128 geben lokale Abtropfpositionen vor. Die Ableitelemente 128 sind gitterartig angeordnet und können einen Abstand von ca. 0,5 cm zueinander aufweisen. Es sind auch andere Abstände vorstellbar. Des Weiteren können die Ableitelemente 128 auch an Elementen 120 mit konstanter Steigung oder an Elementen 120, welche zwei Ablaufflächen 116, 116a miteinander verbinden, angeordnet werden.

Nachdem das Wasser 400 die Unterseite 129 erreicht hat, bildet sich durch die Oberflächenspannung eine Wasserschicht bzw. Wassertropfen an der Unterseite 129 des Elements 120. Durch die Oberflächenspannung sammeln sich Tropfen an diesen vertikalen Ableitelementen 128. Durch die Gravitation bewegen sich die Tropfen an den vertikalen Ableitelementen 128 nach unten und tropfen schließlich nach unten ab. Durch die Vielzahl der vertikalen Ableitelementen 128 wird der Untergrund 200 bzw. die Oberfläche 210 des Untergrunds 200 und dadurch die Bepflanzung 212 auf dem Untergrund 200 gleichmäßig bewässert und Pfützen sowie Erosion an gewissen Stellen vermieden.

### Bezugszeichen

- 100: Wasserverteilungsanordnung
- 110: Photovoltaikanlage
- 111: Anordnung
- 111A: Photovoltaikmodul
- 112: Unterkante
- 114: Oberkante
- 116: Ablauffläche
- 116a: weitere Ablauffläche
- 117: Rückseite
- 118: Ständer
- 119: Abstand
- 120: Element
- 121: Tiefpunkt
- 122: erster Endbereich
- 123: erster Abschnitt
- 124: zweiter Endbereich
- 125: zweiter Abschnitt
- 126: Durchlassöffnungen
- 127: Einschnitt
- 128: Ableitelement
- 129: Unterseite
- 130: Stützstruktur
- 132: Stützelement in Querrichtung
- 134: vertikaler Abstand des zweiten Endbereichs zur Oberkante
- 200: Untergrund
- 210: Oberfläche
- 212: Bepflanzung
- 220: abgedeckter Bereich des Untergrunds
- 300: Himmel
- 400: Wasser
- z: Hochrichtung
- g: Schwerkraftrichtung
- x: Längsrichtung
- y: Querrichtung

## Patentansprüche

1. Wasserverteilungsanordnung (100) für eine gegen eine Schwerkraftrichtung (g) geneigte Ablauffläche (116) einer Anordnung (111), insbesondere eines Photovoltaikmoduls (111A), wobei die Ablauffläche (116) einen Untergrund (200) wenigstens in einem Bereich (220) abdeckt, umfassend
wenigstens ein Element (120) mit einem ersten Endbereich (122), welcher in einer Betriebsstellung an einer Unterkante (112) der Ablauffläche (116) befestigt ist, wobei das Element (120) eine Verlängerung der Ablauffläche (116) ausbildet, wobei Wasser (400) von der Ablauffläche (116) zum Element (120) leitbar ist,
wobei das Element (120) zumindest teilweise unter die korrespondierende Ablauffläche (116) geführt ist und Wasser (400) über eine dem Untergrund (200) zugewandte Unterseite (129) des Elements (120) zum Untergrund (200) gelangt, wodurch eine fluidische Verbindung zwischen der Ablauffläche (116) und zumindest einen Abschnitt des von der Ablauffläche (116) abgedeckten Bereichs (220) entsteht, so dass
das von der Ablauffläche (116) abfließende Wasser (400) über das Element (120) zumindest zum Abschnitt des von der Ablauffläche (116) abgedeckten Bereichs (220) des Untergrunds (200) leitbar ist.

2. Wasserverteilungsanordnung nach Anspruch 1, wobei das Wasser (400) über den ersten Endbereich (122) des Elementes (120) auf die dem abgedeckten Bereich (220) zugewandte Unterseite (129) des Elements (120) gelangt und von dort über dem abgedeckten Bereich (220) abtropft, insbesondere wobei eine Rauigkeit der Unterseite (129) und/oder ein sich durch eine Oberflächenspannung und/oder durch Zwischenräume ergebende Wasser-Aufnahmevermögen des Elements (120) und/oder an einer Unterseite (129) des Elements (120) parallel zur Schwerkraftrichtung (g) angeordnete Ableitelemente (128) Abtropfbereiche an der Unterseite (129) vorgeben.

3. Wasserverteilungsanordnung nach Anspruch 1 oder 2, wobei das Wasser (400) im ersten Endbereich (122) zum Element (120) gelangt, wobei das Element (120) permeabel ausgebildet ist und Durchlassöffnungen (126) umfasst, durch welche das Wasser (400) über dem abgedeckten Bereich (220) abtropft, insbesondere wobei das permeable Element (120) als Netz und/oder als Tuch und/oder als Sieb und/oder als Lochblech und/oder als Schar nebeneinander verlaufender Fasern ausgebildet ist.

4. Wasserverteilungsanordnung nach einem der vorhergehenden Ansprüche, wobei das Element (120) gegen die Schwerkraftrichtung (g) geneigt ist.

5. Wasserverteilungsanordnung nach Anspruch 4, wobei die Neigung des Elements (120) konstant ist oder
wobei die Neigung des Elements (120) zwischen dem ersten Endbereich (122) und einem zweiten Endbereich (124) abnimmt oder wobei der Verlauf des Elements (120) von dem ersten Endbereich (122) ausgehend bis zu einem Tiefpunkt (121) abfallend ist und ab dem Tiefpunkt (121) zu dem zweiten Endbereich (124) hin ansteigt.

6. Wasserverteilungsanordnung nach Anspruch 5, wobei der zweite Endbereich (124) des Elements (120) unterhalb der Ablauffläche (116) angeordnet ist, an welcher der erste Endbereich (122) befestigt ist, insbesondere wobei der tiefste Punkt des Elements (120) der zweite Endbereich (124) des Elements (120) ist
oder wobei der zweite Endbereich (124) des Elementes (120) zu einer weiteren Ablauffläche (116a) oder unter eine weitere Ablauffläche (116a) geführt ist, insbesondere wobei der Verlauf des Elementes (120) den Tiefpunkt (121) als tiefsten Punkt aufweist.

7. Wasserverteilungsanordnung nach einem der Ansprüche 3 bis 6, wobei eine Durchlässigkeit des permeabel ausgebildeten Elements (120) zwischen dem ersten Endbereich (122) und zweiten Endbereich (124) konstant ist oder
wobei eine Durchlässigkeit des permeabel ausgebildeten Elements (120) vom ersten Endbereich (122) zum zweiten Endbereich (124) und/oder zum Tiefpunkt (121) zunimmt.

8. Wasserverteilungsanordnung nach einem der vorhergehenden Ansprüche, wobei das Element (120) aus optisch transparentem Material ausgebildet ist, insbesondere wobei eine Lichtdurchlässigkeit des Elements (120) zwischen dem ersten Endbereich (122) und dem zweiten Endbereich (124) und/oder zum Tiefpunkt (121) hin variiert.

9. Wasserverteilungsanordnung nach einem der vorhergehenden Ansprüche, wobei das Element (120) in Längsausdehnungsrichtung verlaufende Einschnitte (127) aufweist.

10. Wasserverteilungsanordnung nach einem der vorhergehenden Ansprüche, wobei eine Stützstruktur (130) das Element (120) abstützt, insbesondere wobei wenigstens ein in Querausdehnungsrichtung des Elements (120) verlaufendes Stützelement (132) der Stützstruktur (130) den ersten Endbereich (122) und/oder den zweiten Endbereich (124) des Elements (120) abstützt.

11. Wasserverteilungsanordnung nach Anspruch 10, wobei wenigstens ein in Längsausdehnungsrichtung des Elements (120) verlaufendes Stützelement der Stützstruktur (130) die Neigung des Elements (120) vorgibt.

12. Wasserverteilungsanordnung nach einem der vorhergehenden Ansprüche, wobei der zweite Endbereich (124) des Elements (120) über ein Verbindungselement mit der Oberkante (114) der Ablauffläche (116) und/oder mit wenigstens einer Seite der Anordnung (111) und/oder mit einem Ständer (118) verbunden ist,
wobei ein vertikaler Abstand (134) des zweiten Endbereichs (124) zur Oberkante (114) durch eine Länge des Verbindungselements vorgegeben ist, insbesondere wobei das Verbindungelement längenverstellbar ausgebildet ist.

13. Photovoltaikanlage (110) mit einer Wasserverteilungsanordnung (100) für eine gegen eine Schwerkraftrichtung (g) geneigte Ablauffläche (116) einer Anordnung (111) nach einem der vorhergehenden Ansprüche, wobei die Anordnung (111) ein Photovoltaikmodul (111A) ist, dessen Ablauffläche (116) einen Untergrund (200) in wenigstens in einem Bereich (220) abdeckt.

14. Photovoltaikanlage nach Anspruch 13, wobei das Photovoltaikmodul (111A) unverschwenkbar ausgebildet ist.

15. Photovoltaikanlage nach Anspruch 13 oder 14, wobei das Photovoltaikmodul (111A) an der Oberseite und an der Unterseite Photovoltaikelemente aufweist.
